# EUROPÄISCHE PATENTSCHRIFT

(11) **EP 3 816 882 B1**
(45) Veröffentlichungstag und Bekanntmachung des Hinweises auf die Patenterteilung: **02.04.2025**
(21) Anmeldenummer: 20203218.1
(22) Anmeldetag: 22.10.2020
(51) Int. Cl.: G06Q 10/00

(54) **SYSTEM MIT NFC-TAG**
SYSTEM WITH NFC TAG
SYSTÈME POURVU D'ÉTIQUETTE NFC

(30) Priorität: 29.10.2019 EP 19205785
(43) Veröffentlichungstag der Anmeldung: 05.05.2021
(73) Patentinhaber: PortaNet AG, 6032 Emmen (CH)
(72) Erfinder: Koessler, Thomas, 6103 Schwarzenberg (CH)
(74) Vertreter: Koelliker, Robert

(56) Entgegenhaltungen:
- EP-A1- 1 543 948
- DE-A1- 102007 035 374
- DE-A1- 102014 217 865
- DE-U1- 202016 105 393

## Beschreibung

Die vorliegende Erfindung bezieht sich auf ein System zur individuellen Identifikation einer Vielzahl von wartungsrelevanten Gegenständen und zum gezielten Abfragen von Informationen zu den Gegenständen, auf einen NFC-TAG für den Einsatz im System, ein Verfahren zur individuellen Identifikation der wartungsrelevanten Gegenstände und/oder zum gezielten Abfragen von Informationen im System umfassend den NFC-TAG, sowie die Verwendung des Systems und des NFC-TAGs.

Wartungsrelevante Gegenstände wie bewegliche Bauteile und verfahrenstechnische Anlagen und Komponenten müssen regelmässig überprüft und gewartet werden. Dabei stellt sich bei deren Überprüfung resp. bei deren Wartung oft die Frage nach spezifischen Informationen zum jeweiligen Gegenstand und/oder dessen Komponenten, wie beispielsweise Hersteller, Alter, Typenbezeichnung sowie zu einzelnen Bauteilen und zur Historie des Gegenstandes und dessen Komponenten, beispielsweise wann eine Wartung durchgeführt wurde und wann welche Bauteile ersetzt oder repariert wurden.

Um die benötigten Informationen möglichst schnell abzurufen, werden oft an die Gegenstände kleine Schilder angebracht, die beispielsweise die Seriennummer des Gegenstands aufweisen. Anhand dieser Schilder und dem Standort des Gegenstandes können dann benötigte Informationen zum Gegenstand hinzugezogen werden. Dabei umfassen die Schilder in der Regel eine numerische Zahl, beispielsweise die Seriennummer des Gegenstands, oder einen Barcode, welcher optisch eingelesen werden kann.

Die Angaben auf dem Schild begnügen sich in aller Regel auf allgemeine Informationen zum jeweiligen Gegenstand, wie beispielsweise dessen Seriennummer. So ist es möglich, dass im gleichen Gebäude verschiedene Gegenstände die gleiche Bezeichnung, d.h. Seriennummer, aufweisen. Dies führt zu einer schlechten Unterscheidbarkeit oder sogar zu einer Verwechslung von Gegenständen im gleichen Gebäude. Auch sind Informationen zu einzelnen Bauteilen des Gegenstands aus der Seriennummer nicht direkt ersichtlich und müssen - wenn sie benötigt werden - mühsam zusammengesucht werden.

Befinden sich die Angaben auf dem Schild in Form einer numerischen Zahl, muss diese für eine Abfrage manuell übertragen, z.B. abgetippt, werden, was zu Fehlern führen kann. Werden die Angaben optisch, typischerweise durch Scannen eines Barcodes, gelesen, muss der Barcode noch genügend intakt sein, um ihn korrekt einlesen zu können. Dies ist jedoch - insbesondere bei älteren Schildern - nicht immer der Fall, beispielsweise wenn das Schild mit Farbe überstrichen oder wenn dessen Oberfläche stark beschädigt worden ist.

Daher ist es die Aufgabe der vorliegenden Erfindung, ein System bereit zu stellen, mit welchem die Nachteile des Standes der Technik behoben werden können. Dabei soll das System - ohne ein dediziertes Lesegerät verwenden zu müssen - ein sicheres, einfaches Erfassen von Gegenständen ermöglichen, auch nachdem ein dazu angebrachtes Schild beschädigt oder überdeckt wurde. Zudem darf es keine Verwechslungsgefahr von einzelnen Gegenständen geben, auch wenn ein bestimmter Typ eines Gegenstands mehrmals am gleichen Ort, beispielsweise im gleichen Gebäude, vorkommt. Auch soll es möglich sein, relevante Informationen zu den Gegenständen sowie deren einzelnen Bauteilen - insbesondere auch in Bezug auf deren Wartung -, schnell und unkompliziert einzusehen und gegebenenfalls zu aktualisieren.

Diese komplexe Aufgabe konnte überraschenderweise gelöst werden mit einem System (1) zur individuellen Identifikation einer Vielzahl von wartungsrelevanten Gegenständen (2), wobei jeder Gegenstand (2) ein Bauteil (2.0) oder eine Vielzahl von verschiedenen Bauteilen (2.1, 2.2, ..., 2.n) umfasst, zum gezielten Abfragen von Informationen zu den einzelnen Gegenständen (2) und zu dem Bauteil (2.0) oder zu mindestens einem Teil der Bauteile (2.1, 2.2, ..., 2.n) der jeweiligen Gegenstände (2), sowie gegebenenfalls zum Auslösen einer Aktion, wobei das System (1)
- einen passiven NFC-TAG (3) mit einer NFC-Antenne (3.1), einem NFC-Transponderchip (3.2) und einer Matrix (3.3) umfasst, wobei die NFC-Antenne (3.1) und der NFC-Transponderchip (3.2) in die Matrix (3.3) eingeschweisst sind,
- ein NFC-fähiges mobiles elektronisches Gerät (4), insbesondere ein Smartphone oder ein Tablet, und
- einen externen Server (5) umfasst,
wobei in einer auf dem Server (5) gespeicherten Datenbank mindestens eine Information zu jedem Gegenstand (2), dem Bauteil (2.0) und/oder zumindest zu einem Teil der Bauteile (2.1, 2.2, ..., 2.n) des jeweiligen Gegenstands (2) gespeichert ist, und auf dem NFC-Tag (3) und/oder auf dem mobilen elektronischen Gerät (4) eine Software gespeichert ist, anhand welcher mit dem mobilen elektronischen Gerät (4) auf die auf dem Server (5) gespeicherte Datenbank zugegriffen werden kann, wobei
a) der NFC-TAG (3) mit dem Bauteil (2.0) oder mit mindestens einem Bauteil (2.1, 2.2, ..., 2.n) eines Gegenstands (2) verbunden, insbesondere verschraubt, vernietet und/oder verklebt, ist,
b) mindestens in einem NFC-TAG (3) und/oder zwischen mindestens einem NFC-TAG (3) und einem Bauteil (2.0, 2.1, 2.2, ..., 2.n) ein Antistatik-Material (6) angeordnet ist, und
c) jeder NFC-TAG (3) für den jeweiligen Gegenstand (2), mit welchem der NFC-TAG (3) verbunden ist, eine individuelle Identifikation umfasst, wodurch der NFC-TAG (3) den jeweiligen Gegenstand (2) und/oder das Bauteil (2.0) oder mindestens ein Teil der Bauteile (2.1, 2.2, ..., 2.n) des jeweiligen Gegenstands (2) eindeutig identifiziert.

Dokument DE202016105393 U1 offenbart einen Feuerlöscher mit einer Griffarmatur und einen NFC-TAG, wobei das NFC-TAG in die Griffarmatur integriert ist.

Beansprucht wird auch ein NFC-TAG (3*) für den Einsatz im erfindungsgemässen System (1), wobei
- der NFC-TAG (3*) ein passiver TAG ist mit einer NFC-Antenne (3.1), einem NFC-Transponderchip (3.2) und einer Matrix (3.3),
- die Matrix (3.3) des NFC-TAGs (3*) eine Kunststoffmatrix darstellt in welcher die NFC-Antenne (3.1) und der NFC-Transponderchip (3.2) eingeschweisst sind,
   wobei
- auf einer Seite des NFC-TAGs (3*) eine Antistatik-Beschichtung (6.1), insbesondere in Form einer Antistatik-Folie und/oder als Antistatikspray-Beschichtung, angeordnet ist, und
- der NFC-TAG (3*) kein Anzeigefeld umfasst.

Zudem wird auch Verfahren beansprucht zur individuellen Identifikation einer Vielzahl von wartungsrelevanten Gegenständen (2) und/oder zum gezielten Abfragen von Informationen zu den einzelnen Gegenständen (2) und zu dem Bauteil (2.0) oder zu mindestens einem Teil der Bauteile (2.1, 2.2, ..., 2.n) der jeweiligen Gegenstände (2) im erfindungsgemässen System (1), sowie gegebenenfalls zum Auslösen einer Aktion, wobei
a) in mindestens einem NFC-TAG (3,3*) und/oder zwischen mindestens einem NFC-TAG (3) und dem Bauteil (2.0) oder dem mindestens einen Bauteil (2.1, 2.2, ..., 2.n) ein Antistatik-Material (6) angeordnet wird,
b) der NFC-TAG (3,3*) an ein Bauteil (2.0) oder an mindestens einem Bauteil (2.1, 2.2, ..., 2.n) eines Gegenstands (2) angebracht wird,
c) jedem NFC-TAG (3,3*) für das jeweilige Bauteil (2.0) oder dem mindestens einen Bauteil (2.1, 2.2, ..., 2.n), mit welchem der NFC-TAG (3,3*) verbunden wird, eine individuelle Identifikation zugeordnet wird, wodurch auch der jeweilige Gegenstand (2) durch den NFC-TAG (3,3*) eine eindeutige Identifikation erhält,
d) mindestens eine Information zum Gegenstand (2), Bauteil (2.0) oder mindestens einem Bauteil (2.1, 2.2, ..., 2.n), an welchem der NFC-TAG (3,3*) angebracht ist, in die auf dem Server gespeicherte Datenbank eingegeben und gespeichert wird,
e) das NFC-fähige mobile elektronische Gerät (4) innerhalb NFC-Distanz zum am Gegenstand (2) oder am Bauteil (2.0) oder am mindestens einen Bauteil (2.1, 2.2, ..., 2.n) angeordneten NFC-TAG (3,3*) positioniert, den NFC-TAG (3,3*) gescannt und somit die auf dem NFC-TAG (3,3*) gespeicherte individuelle Identifikation ausgelesen wird,
f) die auf dem NFC-Tag (3,3*) und/oder auf dem NFC-fähigen mobilen elektronischen Gerät (4) gespeicherte Software gestartet wird, wodurch eine Verbindung zur auf dem Server (5) gespeicherten Datenbank aufgebaut und die vom NFC-TAG (3,3*) ausgelesene individuelle Identifikation zum Server (5) übermittelt wird,
g) der Gegenstand (2), das Bauteil (2.0) oder mindestens ein Bauteil (2.1, 2.2, ..., 2.n) an welchem der NFC-TAG (3,3*) angeordnet ist, identifiziert wird indem die übermittelte individuelle Identifikation der gleichen in der Datenbank gespeicherten Identifikation zugeordnet wird, und
h) gegebenenfalls Informationen zum Gegenstand (2), Bauteil (2.0) oder mindestens einem Bauteil (2.1, 2.2, ..., 2.n) des jeweiligen Gegenstands (2) abgefragt und/oder eine Aktion ausgelöst wird.

Beansprucht wird auch die Verwendung des erfindungsgemässen Systems (1) und des erfindungsgemässen NFC-TAGs (3*)
i) zur individuellen Identifikation einer Vielzahl von Gegenständen (2), wobei jeder Gegenstand (2) ein Bauteil (2.0) oder eine Vielzahl von verschiedenen Bauteilen (2.1, 2.2, ..., 2.n) umfasst,
ii) zum gezielten Abfragen von Informationen zu den einzelnen Gegenständen (2) und zu dem Bauteil (2.0) oder zu mindestens einem Teil der Bauteile (2.1, 2.2, ... 2.n) der jeweiligen Gegenstände (2), sowie
iii) gegebenenfalls zum Auslösen einer Aktion.

Das erfindungsgemässe System (1), der erfindungsgemässe NFC-TAG (3*), das erfindungsgemässe Verfahren sowie die erfindungsgemässe Verwendung bieten überraschenderweise viele Vorteile. Auf den NFC-TAG (3) des erfindungsgemässen Systems (1) und den erfindungsgemässen NFC-TAG (3*) kann auf einfache Art und Weise eine individualisierte Information zum, d.h. eine individuelle Identifikation auf den, jeweiligen NFC-TAG (3,3*) gespeichert werden. Befindet sich die gleiche individualisierte Information in einer auf dem Server (5) gespeicherten Datenbank, besteht zwischen jedem NFC-TAG (3,3*) und dem in der Datenbank des Servers (5) erfassten individualisierte Information eine eindeutige Korrelation. Werden nun auf der Datenbank Informationen zum Gegenstand (2) und/oder Bauteil (2.0, 2.1, 2.2, ..., 2.n), an welchem der NFC-TAG (3,3*) angebracht ist, gespeichert, können diese Informationen am Ort des Gegenstands (2) mittels mobilen elektronischen Gerät (4) einfach und schnell abgerufen, angepasst und/oder verändert werden. Dazu wird zunächst die auf dem NFC-TAG gespeicherte individuelle Identifikation des Gegenstandes (2) mit dem mobilen elektronischen Gerät (4) ausgelesen und anschliessend mit dem Gerät (4) eine Kommunikation mit der auf dem Server (5) gespeicherten Datenbank aufgebaut. Nach Verifikation der ausgelesenen individuellen Identifikation des Gegenstandes (2) können so mit dem Gerät (4) alle zum Gegenstand (2) gehörenden Informationen abgefragt werden und gegebenenfalls eine Aktion ausgelöst werden. Somit steht beispielsweise bei einer Wartung des Gegenstands (2) und/oder Bauteils (2.0, 2.1, 2.2, ..., 2.n), an welchem der NFC-TAG (3,3*) mit der gleichen individualisierten Informationen angebracht ist, eine im Prinzip beliebig grosse Menge an Informationen auf einfache Art und Weise zur Verfügung. So ist es auch möglich, beispielsweise ganze Bedienungshandbücher und/oder Videos zur Handhabung, Revision und/oder Reparatur des Gegenstands (2) und/oder mindestens eines Bauteils (2.0, 2.1, 2.2, ..., 2.n) zentral auf dem Server (5) zu speichern, welche dann vor Ort mit dem Gerät (4) einfach und bequem abgerufen werden können. Dadurch steht beispielsweise bei der Revision und/oder Reparatur nicht nur mehr - und immer aktualisierte - Information zur Verfügung, sondern umfangreiche Papier-basierte Bedienungshandbücher werden überflüssig. Mit anderen Worten: Auf dem Server (5) kann eine grosse Menge an Information zur Verfügung gestellt werden, welche auch zentral verwaltet werden kann. Auch kann bei Bedarf eine Aktion, beispielsweise das Bestellen eines Ersatzteils, ausgelöst werden. Zudem kann jeder Gegenstand (2) und jedes Bauteil (2.0, 2.1, 2.2, ..., 2.n) gut von anderen, auch baugleichen oder bauähnlichen, Gegenständen (2) und/oder Bauteil (2.0, 2.1, 2.2, ..., 2.n) unterschieden werden, was ein sicheres und einfaches Erfassen der Gegenstände (2) und Bauteile (2.0, 2.1, 2.2, ..., 2.n) ermöglicht. Somit werden Verwechslungen verhindert, beispielsweise wenn mehrere baugleiche oder ähnliche Gegenstände (2) am gleichen Ort vorhanden sind.

Im erfindungsgemässen System (1) und erfindungsgemässen Verfahren können die zum jeweiligen Gegenstand (2), zum Bauteil (2.0) oder zur Vielzahl von verschiedenen Bauteilen (2.1, 2.2, ..., 2.n) relevanten Informationen auf einem externen, zentralen Server (5) gespeichert und somit auch zentral verwaltet, abgefragt und ergänzt werden. Somit muss auf dem NFC-Transponderchip (3.2) des NFC-TAGs (3,3*) lediglich die zum spezifischen Gegenstand (2) oder Bauteil (2.0) zugehörige individuelle Identifikation, d.h. lediglich eine sehr geringe Datenmenge, gespeichert werden, wodurch der NFC-Transponderchip (3.2) entsprechend klein gehalten werden kann. Auf dem zentralen Server (5) können dann jedoch beliebig viele Informationen zum Gegenstand (2), zum Bauteil (2.0) und/oder zu einer Vielzahl von verschiedenen Bauteilen (2.1, 2.2, ..., 2.n) abgelegt werden. Diese Informationen können bei Bedarf, beispielsweise während einer Wartung, auf einfache Art und Weise mit dem NFC-fähigen mobilen elektronischen Gerät (4) mittels einer End-zu-End Verbindung vom Server (5) abgefragt, auf dem Server (5) ergänzt, aktualisiert und/oder verändert werden.

Somit können verschiedenste Daten zu einem Gegenstand (2) und somit zu einem oder mehreren Bauteilen (2.0, 2.1, 2.2, ..., 2.n) einfach vereint werden, sodass sie mittels einem einzelnen Zugriff - sofern es die Berechtigung erlaubt - eingesehen, geändert, ergänzt und/oder die Bauteile selber, oder Teile davon, bestellt werden können. Dabei können beispielsweise Daten zu Türen und Fenster, sowie deren einzelne Bauteile, einer ganzen Brandmeldeanlage mit Brandschutztüren und Feuermelder, Gebäudetechnik, Sanitär- und Elektroinstallationen, Links zu E-Stores, aber auch Zutrittskontrolle zusammengefasst werden. Dadurch werden die Daten einfach handhabbar, d.h. sie können einfach überprüft, geändert und erweitert werden, was beispielsweise wichtig ist, wenn neu Anforderungen an die Gegenstände (2) und/oder Bauteile (2.0, 2.1, 2.2, ..., 2.n) gestellt werden. Auch können einfach Listen erstellt, Ersatzteilte bestellt und/oder einzelne Produkte zurückgerufen werden. Dies ist vor allem für das Handling einer grossen Vielzahl von Gegenständen (2) und/oder Bauteilen (2.0, 2.1, 2.2, ..., 2.n) äusserst vorteilhaft. Dies erlaubt somit auch eine zentrale Überwachung einer Vielzahl von Gegenständen, was beispielsweise für eine zentrale Abnahme, beispielsweise einer zentralen Brandabnahme und/oder zur Überprüfung durch eine Gebäudeversicherung, von einem oder mehreren Gebäuden oder Gebäudekomplexen.

Äusserst vorteilhaft ist zudem, dass bestehende Gegenstände (2) und/oder Bauteile (2.0, 2.1, 2.2, ..., 2.n) auf einfache Art und Weise nachgerüstet werden können, indem ein NFC-TAG (3,3*) auf den entsprechenden Gegenstand (2) und/oder Bauteil (2.0, 2.1, 2.2, ..., 2.n) aufgebracht werden können, wobei, wenn der NFC-TAG (3,3*) keine Antistatik-Material (6) umfasst, zwischen dem NFC-TAG (3,3*) und dem Gegenstand (2) und/oder Bauteil (2.0, 2.1, 2.2, ..., 2.n) ein Antistatik-Material (6) befestigt wird. Dabei spielt der Hersteller des jeweiligen Gegenstands (2) und/oder Bauteil (2.0, 2.1, 2.2, ..., 2.n) keine Rolle, da der NFC- TAG (3,3*) im Wesentlichen an alle Gegenstände (2) und Bauteil (2.0, 2.1, 2.2, ..., 2.n) und unabhängig vom jeweiligen Fabrikat angebracht werden kann. Dadurch können bestehende Systeme einfach, schnell und ohne grossen Aufwand zum erfindungsgemässen System (1) mit den genannten Vorteilen erweitert werden. Und bei einer allfälligen Entsorgung kann der NFC-TAG (3,3*) einfach vom jeweiligen Gegenstand (2) und/oder Bauteil (2.0, 2.1, 2.2, ..., 2.n) entfernt und fachgerecht entsorgt werden. Somit können beispielsweise Normen und/oder EU-Richtlinien gut eingehalten werden und gegebenenfalls auch die NFC-TAG (3,3*) schnell und einfach ausgetauscht werden, sollten sich die Normen und/oder Richtlinien ändern. Genannt sind speziell die EU-Richtlinien 2014/53/EU über die Bereitstellung von Funkanlagen auf dem Markt, die EU-Richtlinie 2011/65/EU zur Beschränkung der Verwendung bestimmter gefährlicher Stoffe in Elektro- und Elektronikgeräten, sowie die EU-Richtlinie 2012/19/EU über Elektro- und Elektronik-Altgeräte.

Das erfindungsgemässe System (1) und das erfindungsgemässe Verfahren eignen sich beispielsweise auch sehr gut beim Bauen mit Building Information Modelling (BIM). Denn nach dem Erstellen der Bauten werden die einzelnen NFC-TAG (3,3*) den jeweiligen Gegenständen (2) und/oder Bauteilen (2.0, 2.1, 2.2, ..., 2.n) zugeordnet. Anschliessend kann auf einfache Art und Weise durch Überprüfen des BIM abgeklärt werden kann, ob der verbaute Gegenstand (2) resp. das verbaute Bauteil (2.0, 2.1, 2.2, ..., 2.n) auch tatsächlich den Planvorgaben entspricht. So kann der NFC-TAG (3,3*) bei der BIM-basierten Gebäudeplanung zur Verifizierung der korrekten Ausführung dienen, wobei Bauteile, Bauprodukte, Baumaterialien, Gegenstände, Möbel, Installationen usw. mit den digitalen Planvorgaben vor Ort in Echtzeit überprüft und abgeglichen werden können. Dabei können allfällige Abweichung zwischen dem Soll der Planung und dem Ist der Ausführung festgestellt werden. Dies ist insbesondere bei Erweiterungen, Umbauten und/oder Umnutzungen sowie bei nicht bewilligungspflichtigen Arbeiten äusserst hilfreich. Dies dient der nachhaltigen, sicheren und effizienten Qualitätssicherung und Baudokumentation.

Das erfindungsgemässe System (1) und das erfindungsgemässe Verfahren eignen sich auch sehr gut bei grösseren Gebäuden oder Gebäudekomplexen zur Benachrichtigung eines Reparaturdienstes. Wenn beispielsweise eine Türe klemmt, kann der Hausdienst einfach mit dem NFC-fähigen Smartphone den NFC-TAG (3,3*) auslesen, die darauf gespeicherte Software starten und so eine Verbindung zur auf dem Server (5) gespeicherten Datenbank aufbauen, wodurch die vom NFC-TAG (3,3*) ausgelesene individuelle Identifikation zum Server (5) übermittelt wird. Von diesem kann dann der Reparaturdienst benachrichtigt werden, wobei der Techniker/Monteur anhand der individuellen Identifikation und der auf der Datenbank gespeicherten Daten direkt den exakten Ort der Türe wie auch alle Details wie Ersatzteile zur Türe und gegebenenfalls Montageanleitungen erfährt. Dieser kann dann bei Bedarf auch notwendige Ersatzteile bestellen.

Das erfindungsgemässe System (1) und das erfindungsgemässe Verfahren eignen sich beispielsweis auch sehr gut bei Mährobotern, an welchen der NFC-TAG (3,3*) angebracht werden kann. Dabei kann der Benutzer über das NFC-fähige mobile elektronische Gerät (4) einen Zugriff zur Datenbank besitzen, und so bequem die korrekten Ersatzteile bestellen, Bedienungsanleitung und/oder Videos runterladen. Auch ist es möglich, den Mähroboter zusammen mit anderen Mährobotern zentral zu verwalten, beispielsweise nach Abschluss eines Wartungsvertrags.

Es ist auch möglich, ein einzelner defekter NFC-TAG (3,3*) zu ersetzen. In diesem Fall muss lediglich die individuelle Identifikation des NFC-TAGs (3,3*) auf diesen übertragen und gespeichert oder neu erstellt werden, nicht jedoch die einzelnen spezifische Informationen zum Gegenstand (2) und/oder Bauteil (2.0, 2.1, 2.2, ..., 2.n), da diese zentral auf dem Server (5) gespeichert sind und dort verwaltet werden.

Da der NFC-TAG (3,3*) auf die Oberfläche des Gegenstands (2) und/oder Bauteil (2.0, 2.1, 2.2, ..., 2.n) angebracht wird, ist der NFC-TAG (3,3*) nicht nur gut sichtbar, sondern er kann auch gut - z.B. von Hand - lokalisiert werden, sollte er beispielsweise überstrichen worden sein.

Da der NFC-Transponderchip (3.2) in einer Matrix (3.3) eingeschweisst ist, wird er durch die Matrix (3.3) vor unerwünschten Einwirkungen wie Feuchtigkeit und mechanischen Einwirkungen wie Schläge oder Zerstörung geschützt. Dabei ist es von grossem Vorteil, dass keine Seriennummer manuell abgetippt werden muss, wodurch Fehler vermieden werden und wertvolle Arbeitszeit eingespart wird. Auch spielt es keine Rollte, wenn der NFC-TAG (3,3*) überstrichen wird, da ein Überstreichen des NFC-TAGs (3,3*) keinen Einfluss auf dessen Funktionsweise ausübt, denn die NFC-Wellen werden durch eine Farbschicht nicht beeinträchtig. Da zudem der NFC-TAG (3,3*) ein passiver NFC-TAG ist, wird im NFC-TAG (3,3*) selbst keine Energiequelle, wie beispielsweise eine Batterie, benötigt. Daher braucht der NFC-TAG (3,3*) keine Wartung und die darauf gespeicherte Information kann jederzeit mittels einem nicht-spezifischen, NFC-fähigen mobilen elektronischen Gerät (4) abgerufen werden.

Indem der NFC-TAG (3,3*) mit dem Bauteil (2.0) oder mit mindestens einem Bauteil (2.1, 2.2, ..., 2.n) eines Gegenstands (2) verbunden ist, und jeder NFC-TAG (3,3*) eine individuelle Identifikation umfasst, wird der jeweilige Gegenstand (2) durch den NFC-TAG (3,3*) mittels der individuellen Identifikation eindeutig identifiziert. Und indem im erfindungsgemässen NFC-TAG (3*) und mindestens in einem im erfindungsgemässen System (1) eingesetzten NFC-TAG (3) und/oder zwischen mindestens einem NFC-TAG (3) und einem Bauteil (2.0, 2.1, 2.2, ..., 2.n) ein Antistatik-Material (6) angeordnet ist, können die NFC-TAGs (3,3*) auch problemlos auf Oberflächen aus Metall angebracht und ausgelesen werden, ohne dass das Metall der Gegenstände (2) störend wirkt. Hierzu ist angemerkt, dass ein NFC-TAG (3) ohne Antistatik-Material (6) im NFC-TAG (3) oder wenn zwischen dem NFC-TAG (3) und dem Bauteil (2.0, 2.1, 2.2, ..., 2.n) kein Antistatik-Material (6) angeordnet ist, wenn sich der NFC-TAG (3) auf einer metallenen Oberfläche befindet, mittels NFC nicht ausgelesen werden kann.

Somit können überraschenderweise die herkömmlich verwendeten üblichen Typenschilder, beispielsweise auf Maschinen, Pumpen sowie Kühl- und/oder Heizgeräten, abgelöst oder zumindest ergänzt werden.

Die DE-U-20 2016 105 393 offenbart einen Feuerlöscher mit einer Griffarmatur und einem NFC-Tag, wobei die Griffarmatur ein Kunststoffmaterial aufweist und dass der NFC-Tag in die Griffarmatur integriert ist. Dadurch wird der Nachteil behoben, dass äusserlich auf den Feuerlöscher aufgebrachte Identifizierungsmittel im Laufe der Zeit unleserlich werden oder abfallen. Indem der NFC-Tag in die Griffarmatur aus Kunststoff integriert ist, wird das Auslesen nicht durch Metall erschwert oder verhindert und die Datenintegrität der darauf gespeicherten Daten sichergestellt. Die auf dem NFC-Tag gespeicherten Informationen sind nicht statisch, sondern können dynamisch aktualisiert werden. Somit können neue spezifische Informationen, wie beispielsweise das Sicherheitsdatenblatt, direkt auf den Feuerlöscher übertragen und darauf hinterleget werden. Die gespeicherten Informationen können dynamische Informationen sein wie Standort des Feuerlöschers und statische Informationen sein wie Herstellinformationen wie Herstelldatum und Seriennummer. Der Feuerlöscher kann Teil eines Brandschutzsystems sein mit beispielsweise zwei Feuerlöscher mit je einem NFC-Tag, einer Auslesevorrichtung, welche den NFC-Tag ausliest, eine Übertragungsvorrichtung, welche in Kommunikationsverbindung mit einem Server steht. Mit dem Server ist weiter eine Benutzerschnittstelle verbunden, über welche Benutzereingaben und/oder Ausgaben mit dem Server möglich sind. Auf dem NFC-Tag können spezifische Informationen wie Standort oder Sicherheitsdatenblatt gespeichert sein. Nicht erwähnt ist, dass der NFC-Tag eine individuelle Identifikation umfasst, mit welcher der Feuerlöscher eindeutig identifiziert werden könnte. Speziell nachteilig ist, dass der NFC-Tag bei bestehenden Feuerlöschern nicht nachrüstbar ist, da er werkseitig in die Griffarmatur integriert und so Teil des Feuerlöschers ist. Da zudem der NFC-Tag von aussen nicht sichtbar ist und die NFC-Reichweite gering ist, muss zudem bekannt sein, wo sich genau der NFC-Tag in der Griffarmatur befindet, um den NFC-Tag schnell auslesen zu können. Auch ist der Einsatz des NFC-Tags auf Feuerlöscher mit der spezifischen Griffarmatur beschränkt. Auch kann der Benutzer des Feuerlöschers den Feuerlöscher und den NFC-Tag nicht frei wählen, da der NFC-TAG schon fest im Feuerlöscher integriert ist. Dies wiederum erschwert die Entsorgung des Tags, welcher als Elektroschrott entsorgt werden muss Ein Antistatik-Material wird weder offenbart noch benötigt.

Die DE-A-10 2014 217 865 beschreibt ein Gerät mit einem Geräteteil und mit einem Authentifizierungs- und Zugangsteil zum Authentifizieren eines Benutzers des Geräts und zum Zulassen eines Zugangs des Benutzers zu zumindest einem Teil der Funktionen des Geräteteils, wenn der Benutzer authentifiziert wurde, und zum Sperren eines Zugangs des Benutzers zu den Funktionen des Geräteteils, wenn der Benutzer nicht authentifiziert wurde. Dabei besitzt der Benutzer ein Zugangsberechtigungsmittel, welches er zum Authentifizieren in den Lesebereich der Leseeinrichtung bringt, welche Teil des Authentifizierungs- und Zugangsteils ist. Dabei kann das Zugangsberechtigungsmittel, welches einen Transponder mit Datenspeicher und Antenne umfassen kann, mit der Leseeinrichtung beispielsweise mittels Nahfeldkommunikation kommunizieren. Der Transponder kann ein NFC-Chip und/oder ein RFID-Tag darstellen. Dabei sollen die Funktionen des Geräts sicher und nur für den jeweils berechtigten Benutzer freigegeben werden können. Somit handelt es sich um die Authentifizierung, d.h. Identifizierung, eines Mitarbeiters, welcher den NFC-Chip zu einer Leseeinrichtung bringt zum Lesen des NFC-Chips, sowie zur Freigabe der Zugangsberechtigung des Benutzers. Somit wird kein System offenbart zur individuellen Identifikation von wartungsrelevanten Gegenständen und zum Abfragen von Informationen zu einzelnen Gegenständen. Die Anwesenheit eines NFC-fähigen Smartphones sowie eines Antistatik-Materials ist nicht offenbart und wird auch nicht benötigt, da der Transponder nicht fest an einem Bauteil befestigt ist.

Die DE-A-10 2007 035 374 offenbart eine Vorrichtung zum Verwalten von Daten, wobei die Daten einem komplexen Gegenstand, insbesondere einem Kraftfahrzeug, zugeordnet sind, welcher aus einer Mehrheit von Produkten und diese aus einer Vielzahl von einzelnen Bauteilen aufgebaut sind. Dabei durchlaufen die Bauteile bei der Entwicklung eines Kraftfahrzeugs eine Reihe von Bauständen, d.h. Baustufen, welche die Entwicklungsphasen eines Projekts widerspiegeln, beginnend von der Erstellung eines Konzepts bis hin zum Produktionsauslauf eines Fahrzeuges. Dabei können sich die Baustufen in ihrem Aufbau und ihren Eigenschaften verändern. Deshalb soll eine Vorrichtung und ein Verfahren zum Verwalten von Daten bereit gestellt werden, mit dem eine zeitsparende und bauständeübergreifende Verwaltung und Auswertung von Daten eines komplexen Gegenstands ermöglicht wird. Dabei wird eine Datenbank angelegt, wobei die relevanten Informationen in zwei Matrizen, einer Baustand-Bauteile-Matrix und einer Bauteile-Produkte-Matrix, gespeichert werden, die bevorzugt miteinander verbindbar sind. Die Vorrichtung enthält zudem eine auf einem Speicher abgelegte Datenbank, welche mit einer Eingabeeinheit, einer Recheneinheit und einer Ausgabeeinheit in Verbindung steht, wobei die Datenbank Informationen zu jedem Bauteil in Bezug zum jeweiligen Baustand und weitere Informationen über das Vorhandensein des Bauteiles in den Produkten erfasst. Die Vorrichtung ist nicht geeignet zum Identifizieren einer Vielzahl von Gegenständen. Nicht erwähnt sind u.a. den Einsatz von NFC-TAGs, Smartphone oder Tablets, sowie eines Antistatik Materials.

Und die EP-A-1 543 948 beschreibt einen antistatischen, geformten Gegenstand sowie eine antistatische Farbe. Dabei soll die antistatische Farbe auf den geformten Gegenstand aufgebracht werden können, ohne dass die Oberflächenglätte des Gegenstandes, die Transparenz und die Färbung des Substrats verschlechtert wird. Auch soll so ein antistatischer geformter Gegenstand mit konkaven und konvexen Teilen, einer dreidimensionalen komplizierten Form erhalten werden, auf welchem eine antistatische Beschichtung aufgebracht ist. Der antistatische geformte Gegenstand wird bevorzugt in Reinräumen verwendet und die antistatische Farbe wird zum Beschichten von geformten Gegenständen eingesetzt. Nicht erwähnt sind u.a. das Identifizieren von Gegenständen, den Einsatz von NFC-TAGs, Smartphone oder Tablets, sowie eine auf einem Server gespeicherte Datenbank umfassend Informationen zu einem zu identifizierenden Gegenstand.

### Das System (1)

Das erfindungsgemässe System (1) ist zur individuellen Identifikation einer Vielzahl von wartungsrelevanten Gegenständen (2), zum gezielten Abfragen von Informationen zu den einzelnen Gegenständen (2), zum Bauteil (2.0) oder zu mindestens einem Teil der Bauteile (2.1, 2.2, ..., 2.n) der jeweiligen Gegenstände (2), sowie gegebenenfalls zum Auslösen einer Aktion geeignet. Dabei umfasst jeder Gegenstand (2) ein Bauteil (2.0) oder eine Vielzahl von verschiedenen Bauteilen (2.1, 2.2, ..., 2.n). Die Begriffe Bauteil (2.0) und Vielzahl von verschiedenen Bauteilen (2.1, 2.2, ..., 2.n) werden gemeinsam Bauteil (2.0, 2.1, 2.2, ..., 2.n) genannt. Unter dem Begriff Bauteile werden auch einzelne Komponenten verstanden.

Dabei wird unter individueller Identifikation, d.h. individualisierte Information, welche auf dem NFC-TAG (3,3*) gespeichert ist, einen einmalig zu vergebenden und eindeutig zuordenbaren Identifier, d.h. Code, verstanden. Dieser kann beispielsweise aus Zahlen, Ziffern und/oder Sonderzeichen bestehen.

Unter dem Begriff Vielzahl wird mindestens die Zahl 2, bevorzugt mindestens die Zahl 10, und insbesondere mindestens die Zahl 50, verstanden.

Der Begriff wartungsrelevanter Gegenstand (2) des erfindungsgemässen Systems (1) und des erfindungsgemässen Verfahrens steht für einen Gegenstand (2), der eine periodische Wartung benötigt. Dabei kann der Gegenstand (2) selbst, ein Bauteil (2.0) und/oder eine Vielzahl von verschiedenen Bauteilen (2.1, 2.2, ..., 2.n) die periodische Wartung benötigen.

Das System (1) umfasst
- einen passiven NFC-TAG (3,3*) mit einer NFC-Antenne (3.1), einem NFC-Transponderchip (3.2) und einer Matrix (3.3), wobei die NFC-Antenne (3.1) und der NFC-Transponderchip (3.2) in die Matrix (3.3) eingeschweisst, d.h. eingebettet, eingebracht, angeordnet, verklebt, verschraubt, vernietet und/oder mittels einer anderen, analogen Fertigungsmethode zusammengebaut, sind,
- ein NFC-fähiges mobiles elektronisches Gerät (4), insbesondere ein Smartphone oder ein Tablet, und
- einen externen, typischerweise zentralen, Server (5).

Das NFC-fähige mobile elektronische Gerät (4) des erfindungsgemässen Systems (1) und des erfindungsgemässen Verfahrens ist typischerweise ein kommerziell erhältliches Smartphone oder Tablet der neueren Generation mit eingebautem NFC-Chip und somit ein mobiles elektronisches Gerät mit aktivierbarer NFC-Schnittstelle. Mittels NFC-Frequenz kann das Gerät (4) den NFC-Transponderchip (3.2) des NFC-TAGs (3,3*) so anregen, dass die darauf gespeicherte individuelle Identifikation des NFC-TAGs (3,3*) ausgelesen wird, wodurch der NFC-TAG (3,3*) und somit der Gegenstand (2), das Bauteil (2.0) und/oder die Vielzahl von verschiedenen Bauteilen (2.1, 2.2, ..., 2.n) eindeutig identifiziert werden kann. Die ausgelesene individuelle Identifikation des NFC-TAGs (3,3*) wird mit dem Gerät (4) - typischerweise mittels Telefonie und/oder Internet-Kommunikation - an den Server (5) übermittelt. Dadurch wird ein Zugang zu den Informationen erhalten, die zum jeweiligen Gegenstand (2), Bauteil (2.0) und/oder zu mindestens einem Teil der Bauteile (2.1, 2.2, ..., 2.n) des Gegenstands (2) in der Datenbank des Servers (5) gespeichert sind, erhalten. Mittels geeigneter Software können so gezielte Abfragen von Informationen zu den einzelnen Gegenständen (2) und zu dem Bauteil (2.0) oder zu mindestens einem Teil der Bauteile (2.1, 2.2, ..., 2.n) der jeweiligen Gegenstände (2) getätigt werden. Auch kann gegebenenfalls eine Aktion ausgelöst werden, beispielsweise das Bestellen eines neuen Bauteils (2.0; 2.1, 2.2, ..., 2.n) beim Hersteller oder das Initiieren einer eingehenderen Wartung.

Somit kann das NFC-fähige mobile elektronische Gerät (4) mittels NFC-Kommunikation die auf dem NFC-TAG (3,3*) gespeicherte individuelle Information auslesen und gegebenenfalls verändern oder ergänzen, sowie - typischerweise mittels Telefonie und/oder Internet-Kommunikation und einer End-zu-End Verbindung - mit dem Server (5) kommunizieren, d.h. Daten können vom Gerät (4) an den Server (5) gesendet und auch vom Server (5) empfangen werden.

Der Server (5) des erfindungsgemässen Systems (1) und des erfindungsgemässen Verfahrens ist ein externer und typischerweise zentraler oder Cloud-basierter Server. Mit anderen Worten: Als externer Server kann der Server (5) unabhängig vom Gegenstand (2), Bauteil (2.0) oder der Vielzahl von verschiedenen Bauteilen (2.1, 2.2, ..., 2.n) stehen. Der Server (5) hat Informationen zu einer Vielzahl von NFC-TAGs (3,3*) und deren zugeordnete Gegenstände (2), Bauteilen (2.0) oder der Vielzahl von verschiedenen Bauteilen (2.1, 2.2, ..., 2.n) gespeichert. Dadurch können NFC-TAGs (3,3*) von unterschiedlichsten Orten, Ländern und gegebenenfalls Kontinenten gemeinsam und zentral verwaltet werden.

In einer auf dem Server (5) gespeicherten Datenbank ist mindestens eine Information zu jedem Gegenstand (2), dem Bauteil (2.0) und/oder zumindest zu einem Teil der Bauteile (2.1, 2.2, ..., 2.n) des jeweiligen Gegenstands (2) gespeichert. Zudem ist auf dem NFC-Tag (3,3*) und/oder auf dem Gerät (4) eine Software gespeichert, anhand welcher mit dem Gerät (4) auf die auf dem Server (5) gespeicherte Datenbank und den darin gespeicherten Informationen zugegriffen werden kann, um die Informationen abzufragen, zu ergänzen, zu aktualisieren und/oder zu verändern. Ein analoger Zugriff zur auf dem Server (5) gespeicherten Datenbank kann auch von einem an den Server (5) angeschlossenen Arbeitscomputer erfolgen, beispielsweise zum Einpflegen von Informationen, die neu zur Datenbank hinzugefügt werden.

Erfindungswesentlich ist für das Systems (1), dass
a) der NFC-TAG (3,3*) mit dem Bauteil (2.0) oder mit mindestens einem Bauteil (2.1, 2.2, ..., 2.n) eines Gegenstands (2) verbunden, insbesondere verschraubt, vernietet und/oder verklebt, ist,
b) mindestens in einem NFC-TAG (3,3*) und/oder zwischen mindestens einem NFC-TAG (3) und einem Bauteil (2.0, 2.1, 2.2, ..., 2.n) ein Antistatik-Material (6) angeordnet ist, und
c) jeder NFC-TAG (3,3*) für den jeweiligen Gegenstand (2), mit welchem der NFC-TAG (3,3*) verbunden ist, eine individuelle Identifikation umfasst, wodurch der NFC-TAG (3,3*) den jeweiligen Gegenstand (2) und/oder das Bauteil (2.0) oder mindestens ein Teil der Bauteile (2.1, 2.2, ..., 2.n) des jeweiligen Gegenstands (2) eindeutig identifiziert.

Dadurch wird nicht nur der NFC-TAG (3,3*) eindeutig dem Gegenstand (2), Bauteil (2.0) oder mindestens einem Bauteil (2.1, 2.2, ..., 2.n) des Gegenstands (2) zugeordnet, sondern auch mindestens ein NFC-TAG (3,3*) kann auf Oberflächen aus Metall angebracht werden.

Bevorzugte wartungsrelevante Gegenstände (2) und deren Bauteile (2.0, 2.1, 2.2, ..., 2.n) umfassen bewegliche Teile wie Türen wie Brandschutz- und/oder Sicherheitstüren, Fenster und/oder Tore; elektrische Geräte, d.h. mit elektrischem Strom betriebene Geräte, elektronische Bauteile, elektromechanische Bauteile, Heizungen und/oder Kühlungen und deren Bauteile, technische Apparaturen und deren Bauteile, wie Druckleitungen, Reaktoren, Rührer; technische Anlagen und deren Bauteile, wie Druckluftanlagen, verfahrenstechnische Anlagen, Recyclinganlagen, Mühlen und/oder deren Mahlwerke, Schaltanlagen für Hoch-, Mittel- und/oder Niederspannung, insbesondere Anlagen in der Energieversorgung, Anlagen der Automatisierungstechnik, Gebäudeautomation, Telefonanlagen, Antennenanlagen, Waschanlagen; Industriegüter wie Halbfabrikate, Anlagen, Maschinen, Geräte, Teile und Zubehörbestandteile, Geräte, Pumpen, Ventile, Rührer und/oder mobile Gegenstände, wie Mähroboter.

In einer Ausführungsform umfassen die Gegenstände (2) keine Feuerlöscher, insbesondere keine mobilen, d.h. tragbaren, Feuerlöscher.

In einer bevorzugten Ausführungsform umfassen die auf dem Server (5) gespeicherten Informationen zu den einzelnen Gegenständen (2) und zu dem Bauteil (2.0) oder zu mindestens einem Teil der Bauteile (2.1, 2.2, ..., 2.n) der jeweiligen Gegenstände (2) Informationen zu dem oder den Herstellern, eingesetzten Materialien, Spezifikationen, Wartungszyklen, Sicherheits- und/oder Bedienungsanleitungen, Garantiebestimmungen, Angaben zum Einbau, Konformitäten, Links zu externen Internetseiten und/oder Adressen wie Hersteller- und/oder Lieferadressen, sowie Eigentümerangaben und/oder Servicehefte. Dabei ist es auch möglich, dass alle Informationen, oder eine Auswahl davon, als klassifizierte Informationen gelten, d.h. dass sie nur mit entsprechender Berechtigung vom Server (5) abgefragt werden können. Das Abfragen der Informationen erfolgt im System (1) insbesondere mit dem NFC-fähigen mobilen elektronischen Gerät (4). Es ist jedoch auch möglich, die Informationen mit einem anderen, mit dem Server (5) verbundenen, mobilen Gerät und/oder einem Arbeitscomputer abzufragen. Die Informationen können beispielsweise in Text-, Bild- und/oder Videodateien vorliegen.

Im System (1) kann gegebenenfalls, insbesondere bevorzugt, auch eine Aktion ausgelöst werden. In einer bevorzugten Ausführungsform umfasst das Auslösen einer Aktion das Initiieren einer Wartung, Bestellen und/oder Ersetzen eines Bestandteils, Auslösen eines Alarms, Abfragen von weiteren Informationen, Benachrichtigung des Eigentümers und/oder des technischen Verantwortlichen. Dabei erfolgt das Auslösen der Aktion - gegebenenfalls über den Server (5), insbesondere über die auf dem Server (5) gespeicherte Datenbank - bevorzugt durch das mobile elektronische Gerät (4) und anhand der auf dem NFC-TAG (3,3*) und/oder dem Gerät (4) gespeicherten Software, wobei die Software bevorzugt ein Auswahlmenü umfasst.

In einer bevorzugten Ausführungsform des erfindungsgemässen Systems (1) und des erfindungsgemässen Verfahrens ist das Antistatik-Material (6)
- im NFC-TAG (3,3*) angeordnet und in Form eines Pulvers, einer Paste, Gels, Flüssigkeit und/oder einer Antistatik-Beschichtung (6.1) in die Matrix (3.3) eingearbeitet oder auf die Matrix (3.3) aufgebracht, und/oder
- in Form einer Antistatik-Beschichtung (6.1), insbesondere als Antistatik-Folie und/oder als Antistatikspray-Beschichtung, zwischen dem NFC-TAG (3) und dem Bauteil (2.0) oder dem mindestens einen Bauteil (2.1, 2.2, ..., 2.n) angeordnet.

Dabei reduziert oder verhindert das Antistatik-Material (6) die elektrostatische Aufladung des NFC-TAG (3,3*). Mit anderen Worten: Auch wenn der NFC-TAG (3,3*) auf Metall oder auf einem metallhaltigen Untergrund angebracht ist, kann das Metall resp. der metallhaltige Untergrund keinen störenden Einfluss ausüben beim Ein- resp. Auslesen von Informationen, welche auf dem NFC-TAG (3,3*) gespeichert sind.

Unter Antistatik-Material (6) wird erfindungsgemäss ein Material verstanden, welches einen Oberflächenwiderstand von mindestens 10⁵ Ohm/Flächeneinheit, bevorzugt von mindestens 10⁶ Ohm/ Flächeneinheit, insbesondere von >10⁹ Ohm/Flächeneinheit, aufweist.

Das Antistatik-Material (6) in Form einer Antistatik-Beschichtung (6.1) oder als Auftrag auf die Matrix (3.3) hat beispielsweise eine Schichtdicke von 0.1 mm bis zu 1 cm, insbesondere von 0.2 mm bis zu 5 mm.

Geeignete, nicht-limitierende Antistatik-Materialien (6) sind dem Fachmann bekannt und umfassen nicht-leitende Polymere wie Polyethylen (PE), Polypropylen (PP), Polytetrafluorethylen (PTFE), Poly(meth)acrylate, Silikone, Keramik, Glas, ferrimagnetische keramische Werkstoffe, Metalloxide, Metallcarbonate, Ferrite, Hämatit und/oder Magnetit. Ganz besonders bevorzugt Antistatik-Materialien (6) umfassen ferrimagnetische keramische Werkstoffe, Metalloxide, Metallcarbonate, Ferrite, Hämatit und/oder Magnetit.

### Der NFC-TAG (3,3*)

Unter NFC-TAG wird der im erfindungsgemässen System (1) eingesetzte NFC-TAG (3) wie auch der erfindungsgemässe NFC-TAG (3*), gemeinsam mit NFC-TAG (3,3*) bezeichnet, verstanden. Dabei umfasst der Begriff NFC-TAG (3) - sofern nicht anders angegeben - auch den NFC-TAG (3*), wobei unter NFC-TAG ein kleines Schild oder eine Etikette verstanden wird, welches ein NFC-Transponder umfasst. Der Begriff NFC-TAG steht auch für QID-TAG, d.h. Quality-Identification-TAG, oder BIM-TAG, d.h. Building-Information-Modelling-TAG.

Das Kürzel NFC steht für Near Field Communication, d.h. Nahfeldkommunikation, und ist ein auf der RFID-Technik basierender internationaler Übertragungsstandard zum kontaktlosen Austausch von Daten über kurze Distanzen von wenigen Zentimetern. NFC ist dem Fachmann bekannt.

Auf dem NFC-TAG (3,3*) wird eine für jeden NFC-TAG (3,3*) individuelle Identifikation, typischerweise in Form einer digitalen Identifikationsnummer, gespeichert. Diese identifiziert den NFC-TAG (3,3*) eindeutig. Nachdem der NFC-TAG (3,3*) am Gegenstand (2) und somit an mindestens einem Bauteil (2.0, 2.1, 2.2, ..., 2.n) befestigt ist, wird durch den NFC-TAG (3,3*) auch das Bauteil (2.0, 2.1, 2.2, ..., 2.n) und somit der Gegenstand (2) eindeutig identifiziert. Die individuelle Identifikation wird beispielsweise auf dem NFC-Transponderchip (3.2) oder einem anderen, im NFC-TAG (3,3*) integrierten Speichermedium gespeichert werden.

Der NFC-TAG (3,3*) ist insbesondere ein passiver TAG, d.h. er braucht keine Energieversorgung wie beispielsweise eine Batterie. Somit ist der NFC-TAG (3,3*) wartungsfrei und besitzt im Wesentlichen eine unbeschränkte Lebensdauer. Der passive NFC-TAG (3,3*) ist nicht fähig eigenständig eine Verbindung beispielsweise zum mobilen elektronischen Gerät (4) aufzubauen. Hingegen genügt die Energie, die vom NFC-fähigen Gerät (4) empfangen wird, um die auf dem NFC-TAG (3,3*) gespeicherte individuelle Identifikation an das Gerät (4) zu übermitteln.

Der NFC-TAG (3,3*) umfasst eine NFC-Antenne (3.1), einen NFC-Transponderchip (3.2) und eine Matrix (3.3), wobei die NFC-Antenne (3.1) und der NFC-Transponderchip (3.2) in der Matrix (3.3) eingeschweisst sind. Dabei wird unter dem Begriff "eingeschweisst" erfindungsgemäss auch eingebettet, eingebracht, angeordnet, verklebt, verschraubt, vernietet und/oder mittels einer anderen, analogen Fertigungsmethode zusammengebaut verstanden. Dem Fachmann sind geeignete Verfahren zur Herstellung des NFC-TAGs (3,3*) bekannt.

Durch geeignete Auswahl der Matrix (3.3) des NFC-TAG (3,3*) weist der NFC-TAG (3,3*) bevorzugt flexible, biegsame und nicht-brennbare Eigenschaften auf. Dabei wird unter
- flexibel verstanden, dass der NFC-TAG (3,3*) sich leicht mechanisch verändern lässt. Mit anderen Worten: Ist der NFC-TAG (3,3*) an einem Untergrund wie Metall befestigt und sich der Untergrund beispielsweise aufgrund von Temperaturschwankungen ausdehnt oder zusammenzieht, kann der NFC-TAG (3,3*) die gleichen mechanischen Veränderungen durchlaufen, ohne Schaden zu nehmen. Als bevorzugte Messgrösse eignet sich die Reissdehnung nach DIN 53455, wobei diese - gemessen bei 23°C und 50% relativer Luftfeuchtigkeit, mindestens 10%, bevorzugt mindestens 25%, insbesondere mindestens 50%, beträgt;
- biegsam wird verstanden, dass sich der NFC-TAG (3,3*) um mindestens 10%, insbesondere um mindestens 25% biegen kann, wenn eine Kraft von 10 N bei 23 °C und 50% relativer Luftfeuchtigkeit auf den NFC-TAG (3,3*) wirkt, gemessen nach ISO 13934-1:2013; und
- nicht-brennbar wird erfindungsgemäss verstanden, dass der NFC-TAG (3,3*) eine Baustoffklasse nach DIN 4102-1 von B1 oder besser, insbesondere von A1 oder A2 aufweist.

Besonders geeignete Kunststoffe als Matrix (3.3) für einen NFC-TAG (3,3*) mit flexiblen, biegsamen und nicht-brennbaren Eigenschaften umfassen Polycarbonate (PC), Polytetrafluorethylen (PTFE), hartes Polyvinylchlorid (PVC), Polyvinylidenfluorid (PVDF), Polyethylenterephthalat (PET), Glashartgewebe Schichtpressstoff (HGW EP), Polyphenylenether modifiziert (PPE), Polyphenylenoxid modifiziert (PPO), Polyetherimid (PEI), Polyethersulfon (PES), Polyether-Etherketon (PEEK), Ethylen-Chlortrifluorethylen (E-CTFE). Dabei können die Kunststoffe zur Reduktion der Brennbarkeit gegebenenfalls auch Flammschutzmittel und/oder zur Erhöhung der Biegsamkeit und/oder Flexibilität Weichmacher enthalten.

In einer bevorzugten Ausführungsform stellt die Matrix (3.3) des im System (1) eingesetzten NFC-TAGs (3,3*) eine Kunststoffmatrix dar und der NFC-TAG (3,3*) umfasst eine Dicke von 0.5 bis 10 mm, bevorzugt von 0.6 bis 3 mm, insbesondere von 0.7 bis 1.5 mm; eine Länge von 1 bis 25 cm, bevorzugt von 2 bis 15 cm, insbesondere von 3 bis 10 cm; und eine Breite von 0.5 bis 5 cm, bevorzugt von 0.7 bis 3 cm, insbesondere von 1 bis 2 cm, gemessen mit einem Messschieber nach DIN EN ISO 13385-1. Diese Abmessungen erlauben ein einfaches Auffinden des NFC-TAGs (3,3*) auch nachdem er beispielsweise mit Farbe überstrichen ist. Zudem erlauben die geringen Masse ein einfaches Anbringen an unterschiedlichsten Bauteilen (2.0, 2.1, 2.2, ..., 2.n). Zudem sind dem Fachmann geeignete Kunststoffe für die Matrix (3.3) bekannt.

Der erfindungsgemässe NFC-TAG (3*) ist besonders für den Einsatz im erfindungsgemässen System (1) geeignet und kann somit auf einen Gegenstand (2) angebracht werden. Der NFC-TAG (3*) aber auch in ein Bauteil (2.0, 2.1, 2.2, ..., 2.n) eingebaut werden, sofern er beispielsweise über einer demontierbaren Verkleidung mittels Gerät (4) zugänglich ist. Alternativ kann die den NFC-TAG (3,3*) bedeckende Schicht eine für die NFC-Frequenz durchlässige Schicht darstellen.

Der NFC-TAG (3*) ist ein passiver TAG und weist somit keine Batterie oder anderweitige Stromversorgung auf, wobei der NFC-TAG (3*) eine NFC-Antenne (3.1), einem NFC-Transponderchip (3.2) und einer Matrix (3.3) umfasst. Dabei stellt die Matrix (3.3) des NFC-TAGs (3*) eine Kunststoffmatrix dar in welcher die NFC-Antenne (3.1) und der NFC-Transponderchip (3.2) eingeschweisst sind. Somit ist der NFC-TAG (3*) robust und nicht anfällig auf Zerstörung. Der NFC-TAG (3*) umfasst jedoch kein Anzeigefeld, d.h. kein Display Panel.

Auf einer Seite des passiven NFC-TAGs (3*) ist eine Antistatik-Beschichtung (6.1), insbesondere in Form einer Antistatik-Folie und/oder als Antistatikspray-Beschichtung, angeordnet. Dabei umfasst der NFC-TAG (3*) bevorzugt nur eine Antistatik-Beschichtung (6.1) auf. Wird der NFC-TAG (3*) an einem Gegenstand (2) oder Bauteil (2.0, 2.1, 2.2, ..., 2.n) befestigt, wird bevorzugt der NFC-TAG (3*) so am Gegenstand (2) oder Bauteil (2.0, 2.1, 2.2, ..., 2.n) befestigt, dass die Antistatik-Beschichtung (6.1) zwischen der Matrix (3.3.) mit der eingeschweissten NFC-Antenne (3.1) und dem NFC-Transponderchip (3.2), und dem Gegenstand (2) oder Bauteil (2.0, 2.1, 2.2, ..., 2.n) zu liegen kommt.

In einer bevorzugten Ausführungsform ist am NFC-TAG (3*) auf der zum NFC-TAG (3*) abgewandten Seite der Antistatik-Beschichtung (6.1) eine Klebefolie (7) angebracht, anhand welcher der NFC-TAG (3*) auf das Bauteil (2.0) oder das mindestens eine Bauteil (2.1, 2.2, ..., 2.n) des Gegenstands (2) geklebt werden kann. Dies erlaubt eine einfache Befestigung des NFC-TAGs (3*) am Bauteil (2.0, 2.1, 2.2, ..., 2.n) und ermöglicht auf einfache Art und Weise, dass die Antistatik-Beschichtung (6.1) zwischen der Oberfläche des Bauteils (2.0, 2.1, 2.2, ..., 2.n) und der NFC-Antenne (3.1) mit dem NFC-Transponderchip (3.2) zu liegen kommt.

In einer anderen bevorzugten Ausführungsform besteht der NFC-TAG (3*) im Wesentlichen aus einer NFC-Antenne (3.1), einem NFC-Transponderchip (3.2), einer Matrix (3.3), einer Antistatik-Beschichtung (6.1) und gegebenenfalls einer Klebefolie (7), wobei die NFC-Antenne (3.1) und der NFC-Transponderchip (3.2) in der Matrix (3.3) eingeschweisst sind.

In einer weiteren bevorzugten Ausführungsform weist der NFC-TAG (3*) eine Dicke von 0.5 bis 10 mm, bevorzugt von 0.6 bis 3 mm, insbesondere von 0.7 bis 1.5 mm, eine Länge von 1 bis 25 cm, bevorzugt von 2 bis 15 cm, insbesondere von 3 bis 10 cm, und eine Breite von 0.5 bis 5 cm, bevorzugt von 0.7 bis 3 cm, insbesondere von 1 bis 2 cm, auf, gemessen mit einem Messschieber nach DIN EN ISO 13385-1. Diese Abmessungen erlauben ein einfaches Auffinden des NFC-TAGs (3*) auch nachdem er beispielsweise mehrfach mit Farbe überstrichen worden ist. Zudem erlauben die geringen Masse ein einfaches Anbringen an unterschiedlichsten Bauteilen (2.0, 2.1, 2.2, ..., 2.n).

In einer anderen bevorzugten Ausführungsform ist auf derjenigen Oberfläche des NFC-TAG (3,3*), welche der Antistatik-Beschichtung (6.1) abgewandt ist, ein QR-Code und/oder eine individuelle Identifikationsnummer aufgedruckt. Dies erlaubt die Identifikation des NFC-TAG (3,3*) auch optisch durch Scannen des GR-Codes oder durch Eintippen der Identifikationsnummer. Dies erlaubt die Identifikation des NFC-TAG (3,3*) auch dann, wenn nur ein mobiles Gerät ohne NFC Funktion - beispielsweise, wenn diese defekt ist - verfügbar ist. Zudem kann dadurch der NFC-TAG (3,3*) ausgelesen werden, wenn der NFC-TAG (3,3*) an einem Ort angebracht ist, welcher ausserhalb der NFC-Distanz liegt.

Die NFC-Antenne (3.1), der NFC-Transponderchip (3.2), die Matrix (3.3), das Antistatik-Material (6), die Antistatik-Beschichtung (6.1) und gegebenenfalls die Klebefolie (7) sind typischerweise kommerziell erhältliche Materialien. Der Fachmann kann ohne erfinderisch zu werden eine geeignete Auswahl treffen.

### Das Verfahren

Das erfindungsgemässe Verfahren ist besonders geeignet zur individuellen Identifikation einer Vielzahl von wartungsrelevanten Gegenständen (2) und/oder zum gezielten Abfragen von Informationen zu den einzelnen Gegenständen (2), zum Bauteil (2.0) und/oder zu mindestens einem Teil der Bauteile (2.1, 2.2, ..., 2.n) der jeweiligen Gegenstände (2) im erfindungsgemässen System (1), sowie gegebenenfalls zum Auslösen einer Aktion.

In einem ersten Schritt a) des Verfahrens wird in mindestens einem, bevorzugt bei allen, NFC-TAG (3,3*), und/oder zwischen mindestens einem, bevorzugt bei allen, NFC-TAG (3) und dem Bauteil (2.0) oder dem mindestens einen Bauteil (2.1, 2.2, ..., 2.n) ein Antistatik-Material (6) angeordnet. Wird das Antistatik-Material (6) im NFC-TAG angebracht, erfolgt dieser Schritt typischerweise während der Herstellung des NFC-TAGs (3,3*). Ist das Antistatik-Material (6) eine Antistatik-Beschichtung (6.1), welche im NFC-TAG angeordnet wird, entspricht der NFC-TAG (3) dem NFC-TAG (3*) gemäss vorliegender Erfindung.

In einem zweiten Schritt b) des Verfahrens wird der NFC-TAG (3,3*) an ein Bauteil (2.0) oder an mindestens einem Bauteil (2.1, 2.2, ..., 2.n) eines Gegenstands (2) angebracht, insbesondere verschraubt, vernietet und/oder verklebt. Dabei soll die Verbindung so erfolgen, dass der NFC-TAG (3,3*) fest mit dem Bauteil (2.0, 2.1, 2.2, ..., 2.n) verbunden ist und nur bewusst und mit Aufwand wieder entfernt werden kann. Dadurch soll ein unbeabsichtigtes Entfernen, beispielweise indem der NFC-TAG (3,3*) einfach vom Bauteil (2.0, 2.1, 2.2, ..., 2.n) abfällt, verhindert werden.

In einem dritten Schritt c) des Verfahrens wird jedem NFC-TAG (3,3*) für das jeweilige Bauteil (2.0) oder dem mindestens einen Bauteil (2.1, 2.2, ..., 2.n), mit welchem der NFC-TAG (3,3*) verbunden wird, eine individuelle Identifikation zugeordnet, wodurch das jeweilige Bauteil (2.0) oder die Vielzahl von verschiedenen Bauteilen (2.1, 2.2, ..., 2.n) - und somit auch der jeweilige Gegenstand (2) - durch den NFC-TAG (3,3*) eine eindeutige Identifikation erhält.

In einem vierten Schritt d) des Verfahrens wird mindestens eine Information zum Gegenstand (2), Bauteil (2.0) oder mindestens einem Bauteil (2.1, 2.2, ..., 2.n), an welchem der NFC-TAG (3,3*) angebracht ist, in die auf dem Server gespeicherte Datenbank eingegeben und gespeichert. Dieser Schritt kann auch früher erfolgen und zu unterschiedlichsten Zeiten beliebig oft wiederholt werden, d.h. der Datenbank können, zeitlich nicht limitiert, beliebig viele Informationen zum Gegenstand (2), Bauteil (2.0) oder mindestens einem Bauteil (2.1, 2.2, ..., 2.n) hinzugefügt werden.

In einem fünften Schritt e) des Verfahrens wird das NFC-fähige mobile elektronische Gerät (4) innerhalb NFC-Distanz zum am Gegenstand (2) oder am Bauteil (2.0) oder am mindestens einen Bauteil (2.1, 2.2, ..., 2.n) angeordneten NFC-TAG (3,3*) positioniert, den NFC-TAG (3,3*) gescannt und somit die auf dem NFC-TAG (3,3*) gespeicherte individuelle Identifikation ausgelesen. Dabei wird unter NFC-Distanz eine Distanz von bis zu 20 cm, insbesondere bis zu 10 cm, verstanden.

In einem sechsten Schritt f) des Verfahrens wird die auf dem NFC-Tag (3,3*) und/oder auf dem NFC-fähigen mobilen elektronischen Gerät (4) gespeicherte Software gestartet, wodurch eine Verbindung zur auf dem Server (5) gespeicherten Datenbank aufgebaut und die vom NFC-TAG (3,3*) ausgelesene individuelle Identifikation zum Server (5) übermittelt wird. Die auf dem Gerät (4) gespeicherte Software liegt bevorzugt in Form einer App vor und wird typischerweise durch Drücken auf das App-Symbol gestartet. Die Verbindung zum Server (5) erfolgt typischerweise mittels Telefonie und/oder Internet-Kommunikation. Bei Bedarf kann eine Benutzererkennung, beispielsweise mittels Eingabe eines Passworts, abgefragt werden. Dabei ist es auch möglich, die Software auf dem Gerät (4) (von Schritt f)) schon zu einem früheren Zeitpunkt zu starten und anschliessend Schritt e) durchzuführen.

In einem siebten Schritt g) des Verfahrens wird der Gegenstand (2), das Bauteil (2.0) oder mindestens ein Bauteil (2.1, 2.2, ..., 2.n) an welchem der NFC-TAG (3,3*) angeordnet ist, identifiziert indem die übermittelte individuelle Identifikation der gleichen in der Datenbank gespeicherten Identifikation zugeordnet wird. Somit wird ein eindeutiger Zusammenhang zwischen dem NFC-TAG (3,3*) - und demzufolge dem Gegenstand (2), Bauteil (2.0) oder mindestens einem Bauteil (2.1, 2.2, ..., 2.n) des jeweiligen Gegenstands (2) - und den auf dem Server (5) gespeicherten Informationen zum Gegenstand (2), Bauteil (2.0) oder mindestens einem Bauteil (2.1, 2.2, ..., 2.n) des jeweiligen Gegenstands (2) hergestellt.

In einem optionalen achten Schritt h) des Verfahrens werden Informationen zum Gegenstand (2), Bauteil (2.0) oder mindestens einem Bauteil (2.1, 2.2, ..., 2.n) des jeweiligen Gegenstands (2) von der Datenbank des Servers (5) abgefragt und/oder eine Aktion ausgelöst.

Somit können mit dem erfindungsgemässen System und dem erfindungsgemässen Verfahren am Ort eines mit einem NFC-TAG (3,3*) ausgerüsteten Gegenstands (2) oder Bauteils (2.0, 2.1, 2.2, ..., 2.n), beispielsweise während einer Wartung, auch grosse Mengen an Informationen zum Gegenstand (2) oder Bauteil (2.0, 2.1, 2.2, ..., 2.n) auf einfache Art und Weise mit dem NFC-fähigen mobilen elektronischen Gerät (4) mittels einer direkten End-zu-End Verbindung vom Server (5) abgefragt, ergänzt, aktualisiert und/oder verändert werden.

### Die Verwendung

Das erfindungsgemässe Systems (1), der erfindungsgemässe NFC-TAG (3,3*) sowie das erfindungsgemässe Verfahren können vielfältig verwendet werden.

Ganz besonders bevorzugt wird das System (1), der NFC-TAG (3,3*) und das Verfahren erfindungsgemäss verwendet
i) zur individuellen Identifikation einer Vielzahl von Gegenständen (2), wobei jeder Gegenstand (2) ein Bauteil (2.0) oder eine Vielzahl von verschiedenen Bauteilen (2.1, 2.2, ..., 2.n) umfasst,
ii) zum gezielten Abfragen von Informationen zu den einzelnen Gegenständen (2) und zu dem Bauteil (2.0) oder zu mindestens einem Teil der Bauteile (2.1, 2.2, ... 2.n) der jeweiligen Gegenstände (2), sowie
iii) gegebenenfalls zum Auslösen einer Aktion.

In einer bevorzugten Ausführungsform umfasst die erfindungsgemässe Verwendung die periodische Wartung der Gegenstände (2) und des Bauteils (2.0) oder mindestens einem Teil der Bauteile (2.1, 2.2, ... 2.n) der jeweiligen Gegenstände (2).

In einer anderen bevorzugten Ausführungsform der Verwendung umfasst das Auslösen einer Aktion das Initiieren einer Wartung, Bestellen und/oder Ersetzen eines Bestandteils, Auslösen eines Alarms, Abfragen von weiteren Informationen, Benachrichtigung des Eigentümers und/oder des technischen Verantwortlichen, wobei das Auslösen der Aktion bevorzugt anhand der auf dem NFC-TAG (3,3*) und/oder dem mobilen elektronischen Gerät (4) gespeicherten Software erfolgt, wobei die Software bevorzugt ein Auswahlmenü umfasst.

Das System (1) und der passive NFC-TAG (3,3*) eignen sich zudem auch hervorragend in Kombination mit und in Ergänzung zu einem aktiven System zum Messen, Überwachen und gegebenenfalls Steuern von beweglichen und schliessbaren Bauteilen, insbesondere zum Messen und Überwachen der Anzahl Öffnungs- und Schliesszyklen von beweglichen und schliessbaren Bauteilen mit einem Sensor, sowie von Zustandsänderungen von beweglichen und schliessbaren Bauteilen und/oder deren Rahmen. Ein dazu besonders geeignetes System ist in der EP 3 306 023 A1 beschrieben.

Es werden folgende Bezugszeichen verwendet:
- 1: System
- 2: Gegenstand
- 2.0: Bauteil
- 2.1, 2.2, ..., 2.n: Vielzahl von verschiedenen Bauteilen
- 3: passiver NFC-TAG des Systems (1)
- 3*: erfindungsgemässer passiver NFC-TAG
- 3.1: NFC-Antenne des NFC-TAGs (3, 3*)
- 3.2: NFC-Transponderchip des NFC-TAGs (3, 3*)
- 3.3: Matrix des NFC-TAGs (3, 3*)
- 4: NFC-fähiges mobiles elektronisches Gerät
- 5: externer Server
- 6: Antistatik-Material
- 6.1: Antistatik-Beschichtung
- 7: Klebefolie

Im Folgenden werden nicht-limitierende, bevorzugte Ausführungsformen des erfindungsgemässen Systems (1) und des erfindungsgemässen NFC-TAGs (3*) anhand der nachfolgenden Zeichnungen beschrieben, die nicht einschränkend auszulegen sind und die als Bestandteil der Beschreibung verstanden werden:

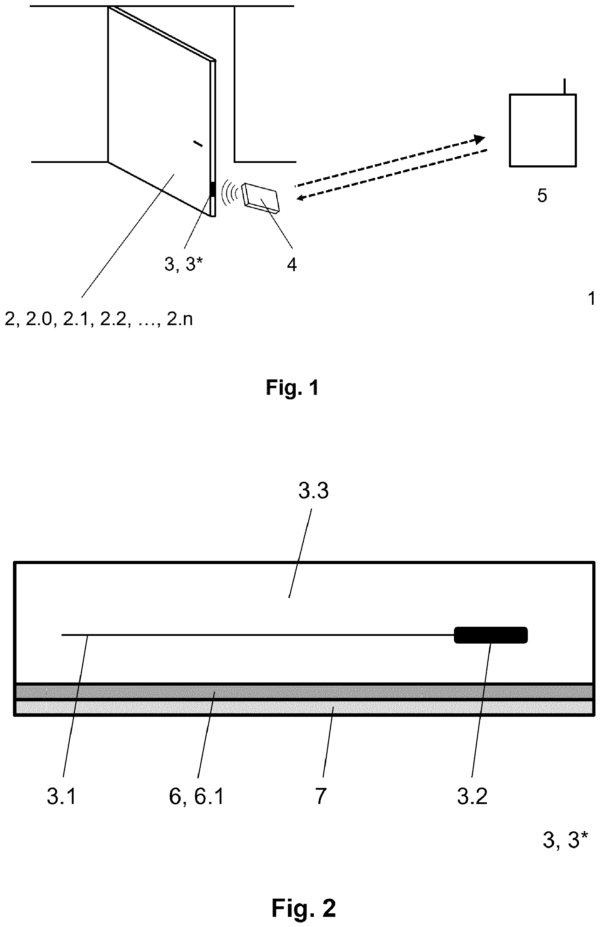

- Fig. 1: zeigt beispielhaft das erfindungsgemässe System (1) zur individuellen Identifikation einer Vielzahl von wartungsrelevanten Gegenständen (2), wobei jeder Gegenstand (2) ein Bauteil (2.0) oder eine Vielzahl von verschiedenen Bauteilen (2.1, 2.2, ..., 2.n) umfasst, zum gezielten Abfragen von Informationen zu den einzelnen Gegenständen (2) und zu dem Bauteil (2.0) oder zu mindestens einem Teil der Bauteile (2.1, 2.2, ..., 2.n) der jeweiligen Gegenstände (2), sowie gegebenenfalls zum Auslösen einer Aktion. Am Bauteil (2.0) oder an mindestens einem Bauteil (2.1, 2.2, ..., 2.n) des Gegenstands (2) ist ein passiver NFC-TAG (3,3*) angebracht, wobei in der Matrix (3.3) des NFC-TAGs (3,3*) eine NFC-Antenne (3.1) und ein NFC-Transponderchip (3.2) eingeschweisst sind (nicht dargestellt). Auf dem NFC-Transponderchip (3.2), und somit im NFC-TAG (3,3*), ist eine individuelle Information gespeichert, wodurch der NFC-TAG (3,3*) den jeweiligen Gegenstand (2) sowie mindestens ein Bauteil (2.0, 2.1, 2.2, ..., 2.n) eindeutig identifiziert. Diese individuelle Information ist auch in einer Datenbank, welche sich auf dem Server (5) befindet, gespeichert. Dabei umfasst die Datenbank mindestens eine Information, bevorzugt viele Informationen, zum jeweiligen Gegenstand (2) und/oder dem Bauteil (2.0) oder Bauteilen (2.1, 2.2, ..., 2.n). Wird nun mittels NFC-fähigem mobilem elektronischen Gerät (4) die auf im NFC-TAG (3,3*) gespeicherte individuelle Information ausgelesen, kann sie - gegebenenfalls über eine Benutzererkennung wie einem Passwort - zum Server (5) und der darauf gespeicherten Datenbank, insbesondere mittels Telefonie oder Internet-Kommunikation, übermittelt werden. Nach dem Abgleich resp. Zuordnung der übermittelten individuellen Information mit der in der Datenbank des Servers (5) gespeicherten individuellen Information können so vor Ort des NFC-TAGs (3,3*), beispielsweise während einer Wartung, direkt grosse Mengen an Informationen zum Gegenstand (2) oder Bauteil (2.0, 2.1, 2.2, ..., 2.n) auf einfache Art und Weise mit dem NFC-fähigen Gerät (4) mittels einer direkten End-zu-End Verbindung vom Server (5) abgefragt, ergänzt, aktualisiert und/oder verändert werden.
- Fig. 2: zeigt beispielhaft einen im erfindungsgemässen System (1) eingesetzten NFC-TAG (3) sowie den erfindungsgemässen NFC-TAG (3*). Der NFC-TAG (3,3*) umfasst eine NFC-Antenne (3.1) und ein NFC-Transponderchip (3.2), die in der Matrix (3.3) eingeschweisst sind. An der unteren Seite der Matrix (3.3.) ist ein Antistatik-Material (6) in Form einer Antistatik-Beschichtung (6.1) sowie auf dieser eine optionale Klebefolie (7) angebracht. Dabei verhindert das Antistatik-Material (6) störende Effekte beim Auslesen der individuellen Identifikation mittels NFC-fähigem mobilem elektronischen Gerät (4) durch darunter liegende metallhaltige Materialien. Und die Klebefolie (7) erlaubt ein einfaches und schnelles Befestigen des NFC-TAGs (3,3*) am Bauteil (2.0, 2.1, 2.2, ..., 2.n). Da die Klebefolie (7) auf der Seite der Antistatik-Beschichtung (6.1) angebracht ist, wird zudem der NFC-TAG (3,3*) automatisch korrekt am Bauteil (2.0, 2.1, 2.2, ..., 2.n), sodass die Antistatik-Beschichtung (6.1) zwischen den NFC-Transponderchip (3.2) mit der NFC-Antenne (3.1) und dem Bauteil (2.0, 2.1, 2.2, ..., 2.n) zu liegen kommt. Dabei ist vorteilhafterweise - insbesondere bevorzugt - die Antistatik-Beschichtung (6.1) auf die untere Seite der Matrix (3.3.) geklebt, insbesondere mittels eines elektrisch nicht-leitenden Klebstoffs, wobei der Klebstoff bevorzugt ein Haftkleber darstellt. Geeignete Klebstoffe sind dem Fachmann bekannt.

## Patentansprüche

1. System (1) zur individuellen Identifikation einer Vielzahl von wartungsrelevanten Gegenständen (2), wobei jeder Gegenstand (2) ein Bauteil (2.0) oder eine Vielzahl von verschiedenen Bauteilen (2.1, 2.2, ..., 2.n) umfasst, zum gezielten Abfragen von Informationen zu den einzelnen Gegenständen (2) und zu dem Bauteil (2.0) oder zu mindestens einem Teil der Bauteile (2.1, 2.2, ..., 2.n) der jeweiligen Gegenstände (2), sowie gegebenenfalls zum Auslösen einer Aktion, wobei das System (1)
- einen passiven NFC-TAG (3) mit einer NFC-Antenne (3.1), einem NFC-Transponderchip (3.2) und einer Matrix (3.3) umfasst, wobei die NFC-Antenne (3.1) und der NFC-Transponderchip (3.2) in die Matrix (3.3) eingeschweisst sind,
- ein NFC-fähiges mobiles elektronisches Gerät (4), insbesondere ein Smartphone oder ein Tablet, und
- einen externen Server (5) umfasst,
wobei in einer auf dem Server (5) gespeicherten Datenbank mindestens eine Information zu jedem Gegenstand (2), dem Bauteil (2.0) und/oder zumindest zu einem Teil der Bauteile (2.1, 2.2, ..., 2.n) des jeweiligen Gegenstands (2, und auf dem NFC-TAG (3) und/oder auf dem mobilen elektronischen Gerät (4) eine Software gespeichert ist, anhand welcher mit dem mobilen elektronischen Gerät (4) auf die auf dem Server (5) gespeicherte Datenbank zugegriffen werden kann, **dadurch gekennzeichnet, dass**
a) der NFC-TAG (3) auf der Oberfläche des Gegenstands (2) und/oder Bauteils (2.0, 2.1, 2.2, ..., 2.n) angebracht und der NFC-TAG (3) mit dem Bauteil (2.0) oder mit mindestens einem Bauteil (2.1, 2.2, ..., 2.n) eines Gegenstands (2) verbunden, insbesondere verschraubt, vernietet und/oder verklebt, ist,
b) mindestens in einem NFC-TAG (3) und/oder zwischen mindestens einem NFC-TAG (3) und einem Bauteil (2.0, 2.1, 2.2, ..., 2.n) ein Antistatik-Material (6) angeordnet ist, und
c) jeder NFC-TAG (3) für den jeweiligen Gegenstand (2), mit welchem der NFC-TAG (3) verbunden ist, eine individuelle Identifikation umfasst, wodurch der NFC-TAG (3) den jeweiligen Gegenstand (2) und/oder das Bauteil (2.0) oder mindestens ein Teil der Bauteile (2.1, 2.2, ..., 2.n) des jeweiligen Gegenstands (2) eindeutig identifiziert.

2. System (1) nach Anspruch 1, **dadurch gekennzeichnet, dass** die wartungsrelevanten Gegenstände (2) und deren Bauteile (2.0, 2.1, 2.2, ..., 2.n) bewegliche Teile wie Türen wie Brandschutz- und/oder Sicherheitstüren, Fenster und/oder Tore; elektrische Geräte, d.h. mit elektrischem Strom betriebene Geräte, elektronische Bauteile, elektromechanische Bauteile, Heizungen und/oder Kühlungen und deren Bauteile, technische Apparaturen und deren Bauteile, wie Druckleitungen, Reaktoren und/oder Rührer; technische Anlagen und deren Bauteile, wie Druckluftanlagen, verfahrenstechnische Anlagen, Recyclinganlagen, Mühlen und/oder deren Mahlwerke, Schaltanlagen für Hoch-, Mittel- und/oder Niederspannung, insbesondere Anlagen in der Energieversorgung, Anlagen der Automatisierungstechnik, Gebäudeautomation, Telefonanlagen, Antennenanlagen, Waschanlagen; Industriegüter wie Halbfabrikate, Anlagen, Maschinen, Geräte, Teile und Zubehörbestandteile, Geräte, Pumpen, Ventile, Rührer und/oder mobile Gegenstände, wie Mähroboter, umfassen.

3. System (1) nach Anspruch 1 oder 2, **dadurch gekennzeichnet, dass** die auf dem Server (5) gespeicherten Informationen zu den einzelnen Gegenständen (2) und zu dem Bauteil (2.0) oder zu mindestens einem Teil der Bauteile (2.1, 2.2, ..., 2.n) der jeweiligen Gegenstände (2) Informationen zu dem oder den Herstellern, eingesetzte Materialien, Spezifikationen, Wartungszyklen, Sicherheits- und/oder Bedienungsanleitungen, technische Merkblätter, Garantiebestimmungen, Angaben zum Einbau, Konformitäten, Links zu externen Internetseiten und/oder Adressen, sowie Eigentümerangaben und/oder Servicehefte umfassen.

4. System (1) nach mindestens einem der Ansprüche 1 bis 3, **dadurch gekennzeichnet, dass** das Auslösen einer Aktion das Initiieren einer Wartung, Bestellen und/oder Ersetzen eines Bestandteils, Auslösen eines Alarms, Abfragen von weiteren Informationen, Benachrichtigung des Eigentümers und/oder des technischen Verantwortlichen umfasst, wobei das Auslösen der Aktion bevorzugt anhand der auf dem NFC-TAG (3) und/oder dem mobilen elektronischen Gerät (4) gespeicherten Software erfolgt und die Software bevorzugt ein Auswahlmenü umfasst.

5. System (1) nach mindestens einem der Ansprüche 1 bis 4, **dadurch gekennzeichnet, dass** die Matrix (3.3) des NFC-TAGs (3) eine Kunststoffmatrix darstellt und der NFC-TAG (3) eine Dicke von 0.5 bis 10 mm, bevorzugt von 0.6 bis 3 mm, insbesondere von 0.7 bis 1.5 mm; eine Länge von 1 bis 25 cm, bevorzugt von 2 bis 15 cm, insbesondere von 3 bis 10 cm; und eine Breite von 0.5 bis 5 cm, bevorzugt von 0.7 bis 3 cm, insbesondere von 1 bis 2 cm, umfasst, gemessen mit einem Messschieber nach DIN EN ISO 13385-1.

6. System (1) nach mindestens einem der Ansprüche 1 bis 5, **dadurch gekennzeichnet, dass** das Antistatik-Material (6)
- im NFC-TAG (3) angeordnet ist und in Form eines Pulvers, einer Paste, Gels, Flüssigkeit und/oder einer Antistatik-Beschichtung (6.1) in die Matrix (3.3) eingearbeitet oder auf die Matrix (3.3.) aufgebracht ist, und/oder
- in Form einer Antistatik-Beschichtung (6.1), insbesondere als Antistatik-Folie und/oder als Antistatikspray-Beschichtung, zwischen dem NFC-TAG (3) und dem Bauteil (2.0) oder dem mindestens einen Bauteil (2.1, 2.2, ..., 2.n) angeordnet ist.

7. NFC-TAG (3*) für den Einsatz im System (1) nach mindestens einem der Ansprüche 1 bis 6, wobei
- der NFC-TAG (3*) ein passiver TAG ist mit einer NFC-Antenne (3.1), einem NFC-Transponderchip (3.2) und einer Matrix (3.3),
- die Matrix (3.3) des NFC-TAGs (3*) eine Kunststoffmatrix darstellt in welcher die NFC-Antenne (3.1) und der NFC-Transponderchip (3.2) eingeschweisst sind,
**dadurch gekennzeichnet, dass**
- auf einer Seite des NFC-TAGs (3*) eine Antistatik-Beschichtung (6.1), insbesondere in Form einer Antistatik-Folie und/oder als Antistatikspray-Beschichtung, angeordnet ist, und
- der NFC-TAG (3*) kein Anzeigefeld umfasst.

8. NFC-TAG (3*) nach Anspruch 7, **dadurch gekennzeichnet, dass** auf der zum NFC-TAG (3*) abgewandten Seite der Antistatik-Beschichtung (6.1) eine Klebefolie (7) angebracht ist, anhand welcher der NFC-TAG (3*) auf das Bauteil (2.0) oder das mindestens eine Bauteil (2.1, 2.2, ..., 2.n) des Gegenstands (2) geklebt werden kann.

9. NFC-TAG (3*) nach Anspruch 7 oder 8, **dadurch gekennzeichnet, dass** der NFC-TAG (3*) eine Dicke von 0.5 bis 10 mm, bevorzugt von 0.6 bis 3 mm, insbesondere von 0.7 bis 1.5 mm, eine Länge von 1 bis 25 cm, bevorzugt von 2 bis 15 cm, insbesondere von 3 bis 10 cm, und eine Breite von 0.5 bis 5 cm, bevorzugt von 0.7 bis 3 cm, insbesondere von 1 bis 2 cm, umfasst, gemessen mit einem Messschieber nach DIN EN ISO 13385-1.

10. Verfahren zur individuellen Identifikation einer Vielzahl von wartungsrelevanten Gegenständen (2) und/oder zum gezielten Abfragen von Informationen zu den einzelnen Gegenständen (2) und zu dem Bauteil (2.0) oder zu mindestens einem Teil der Bauteile (2.1, 2.2, ..., 2.n) der jeweiligen Gegenstände (2) im System (1) nach mindestens einem der Ansprüche 1 bis 6, sowie gegebenenfalls zum Auslösen einer Aktion, **dadurch gekennzeichnet, dass**
a) In mindestens einem NFC-TAG (3,3*) und/oder zwischen mindestens einem NFC-TAG (3) und dem Bauteil (2.0) oder dem mindestens einen Bauteil (2.1, 2.2, ..., 2.n) ein Antistatik-Material (6) angeordnet wird,
b) der NFC-TAG (3,3*) an ein Bauteil (2.0) oder an mindestens einem Bauteil (2.1, 2.2, ..., 2.n) eines Gegenstands (2) angebracht wird,
c) jedem NFC-TAG (3,3*) für das jeweilige Bauteil (2.0) oder dem mindestens einen Bauteil (2.1, 2.2, ..., 2.n), mit welchem der NFC-TAG (3,3*) verbunden wird, eine individuelle Identifikation zugeordnet wird, wodurch auch der jeweilige Gegenstand (2) durch den NFC-TAG (3,3*) eine eindeutige Identifikation erhält,
d) mindestens eine Information zum Gegenstand (2), Bauteil (2.0) oder mindestens einem Bauteil (2.1, 2.2, ..., 2.n), an welchem der NFC-TAG (3,3*) angebracht ist, in die auf dem Server gespeicherte Datenbank eingegeben und gespeichert wird,
e) das NFC-fähige mobile elektronische Gerät (4) innerhalb NFC-Distanz zum Bauteil (2.0) oder am mindestens einen Bauteil (2.1, 2.2, ..., 2.n) angeordneten NFC-TAG (3,3*) positioniert, den NFC-TAG (3,3*) gescannt und somit die auf dem NFC-TAG (3,3*) gespeicherte individuelle Identifikation ausgelesen wird,
f) die auf dem NFC-TAG (3,3*) und/oder auf dem NFC-fähigen mobilen elektronischen Gerät (4) gespeicherte Software gestartet wird, wodurch eine Verbindung zur auf dem Server (5) gespeicherten Datenbank aufgebaut und die vom NFC-TAG (3,3*) ausgelesene individuelle Identifikation zum Server (5) übermittelt wird,
g) der Gegenstand (2), das Bauteil (2.0) oder mindestens ein Bauteil (2.1, 2.2, ..., 2.n), an welchem der NFC-TAG (3) angeordnet ist, identifiziert wird indem die übermittelte individuelle Identifikation der gleichen in der Datenbank gespeicherten Identifikation zugeordnet wird, und
h) gegebenenfalls Informationen zum Gegenstand (2), Bauteil (2.0) oder mindestens einem Bauteil (2.1, 2.2, ..., 2.n) des jeweiligen Gegenstands (2) von der Datenbank des Servers (5) abgefragt, und/oder eine Aktion ausgelöst wird.

11. Verwendung des Systems (1) nach mindestens einem der Ansprüche 1 bis 6 und des NFC-TAGs (3*) nach mindestens einem der Ansprüche 7 bis 9
i) zur individuellen Identifikation einer Vielzahl von Gegenständen (2), wobei jeder Gegenstand (2) ein Bauteil (2.0) oder eine Vielzahl von verschiedenen Bauteilen (2.1, 2.2, ..., 2.n) umfasst,
ii) zum gezielten Abfragen von Informationen zu den einzelnen Gegenständen (2) und zu dem Bauteil (2.0) oder zu mindestens einem Teil der Bauteile (2.1, 2.2, ... 2.n) der jeweiligen Gegenstände (2), sowie
iii) gegebenenfalls zum Auslösen einer Aktion.

12. Verwendung nach Anspruch 11 bei der periodischen Wartung der Gegenstände (2) und des Bauteils (2.0) oder mindestens einem Teil der Bauteile (2.1, 2.2, ... 2.n) der jeweiligen Gegenstände (2).

13. Verwendung nach Anspruch 11 und/oder 12, **dadurch gekennzeichnet, dass** das Auslösen einer Aktion das Initiieren einer Wartung, Bestellen und/oder Ersetzen eines Bestandteils, Auslösen eines Alarms, Abfragen von weiteren Informationen, Benachrichtigung des Eigentümers und/oder des technischen Verantwortlichen umfasst, wobei das Auslösen der Aktion bevorzugt anhand der auf dem NFC-TAG (3,3*) und/oder dem mobilen elektronischen Gerät (4) gespeicherten Software erfolgt, wobei die Software bevorzugt ein Auswahlmenü umfasst.

## Claims

1. A system (1) for the individual identification of a plurality of maintenance-relevant items (2), wherein each item (2) comprises a component (2.0) or a plurality of different components (2.1, 2.2, ..., 2.n), for the targeted retrieval of information concerning the individual items (2) and concerning the component (2.0) or concerning at least some of the components (2.1, 2.2, ..., 2.n) of the respective items (2), and, where applicable, to trigger an action, wherein the system (1) comprises
- a passive NFC TAG (3) with an NFC antenna (3.1), an NFC transponder chip (3.2) and a matrix (3.3), wherein the NFC antenna (3.1) and the NFC-transponder chip (3.2) are welded into the matrix (3.3),
- an NFC-enabled mobile electronic device (4), in particular, a smartphone or tablet, and
- an external server (5),
wherein, in a database stored on the server (5), at least one piece of information concerning each item (2), the component (2.0) and/or at least a part of the components (2.1, 2.2, ..., 2.n) of the respective item (2) is stored, and on the NFC TAG (3) and/or on the mobile electronic device (4), a software is stored, using which the database stored on the server (5) can be accessed with the mobile electronic device (4), **characterized in that**
a) the NFC-TAG (3) is attached to the surface of the item (2) and/or component (2.0, 2.1, 2.2, ..., 2.n) and the NFC-TAG (3) is connected to the component (2.0) or to at least one component (2.1, 2.2, ..., 2.n) of an item (2), in particular, being screwed, riveted and/or glued,
b) an anti-static material (6) is arranged in at least one NFC TAG (3) and/or between at least one NFC TAG (3) and one component (2.0, 2.1, 2.2, ..., 2.n), and
c) each NFC TAG (3) for the respective item (2) to which the NFC TAG (3) is connected comprises an individual identifier, wherein the NFC TAG (3) uniquely identifies the respective item (2) and/or the component (2.0) or at least a part of the components (2.1, 2.2, ..., 2.n) of the respective item (2).

2. The system (1) according to Claim 1, **characterized in that** the maintenance-relevant items (2) and their components (2.0, 2.1, 2.2, ..., 2.n) comprise moving parts, such as doors, such as fire and/or security doors, windows and/or gates; electrical devices, i.e., electrically powered devices, electronic components, electro-mechanical components, heating and/or cooling systems and their components, technical apparatuses and their components, such as pressure pipes, reactors and/or stirrers; technical systems and their components, such as compressed air systems, process-engineering plants, recycling plants, mills and/or their grinders, switchgear for high, medium and/or low voltage, in particular, energy-supply systems, automation systems, building automation, telephone systems, antenna systems, washing systems; industrial goods, such as semi-finished products, plants, machines, devices, parts and accessories, devices, pumps, valves, stirrers and/or mobile items, such as robotic lawnmowers.

3. The system (1) according to Claim 1 or 2, **characterized in that** the information stored on the server (5) concerning the individual items (2) and the component (2.0) or at least a part of the components (2.1, 2.2, ..., 2.n) of the respective items (2) comprises information concerning the manufacturer(s), materials used, specifications, maintenance cycles, safety and/or operating instructions, technical data sheets, warranty provisions, installation information, conformities, links to external websites and/or addresses, as well as owner information and/or service booklets.

4. The system (1) according to at least one of the Claims 1 to 3, **characterized in that** the triggering of an action comprises the initiation of maintenance, ordering and/or replacing a component, triggering an alarm, retrieving further information, notifying the owner and/or the technical manager, wherein the triggering of the action is preferably carried out by means of the software stored on the NFC TAG (3) and/or the mobile electronic device (4), and the software preferably comprises a drop-down menu.

5. The system (1) according to at least one of the Claims 1 to 4, **characterized in that** the matrix (3.3) of the NFC TAG (3) is a plastic matrix, and the NFC TAG (3) comprises a thickness of 0.5 to 10 mm, preferably from 0.6 to 3 mm, in particular, from 0.7 to 1.5 mm; a length of 1 to 25 cm, in particular, from 2 to 15 cm, more particularly, from 3 to 10 cm; and a width of 0.5 to 5 cm, in particular, from 0.7 to 3 cm, more particularly, from 1 to 2 cm, measured with a calliper in accordance with DIN EN ISO 13385-1.

6. The system (1) according to at least one of the Claims 1 to 5, **characterized in that** the anti-static material (6)
- is arranged in the NFC TAG (3) and is incorporated into or applied to the matrix (3.3) in the form of a powder, paste, gel, liquid and/or anti-static coating (6.1), and/or
- is arranged between the NFC TAG (3) and the component (2.0) or at least one component (2.1, 2.2, ..., 2.n) in the form of an antistatic coating (6.1), in particular, as an antistatic film and/or as an antistatic spray coating.

7. An NFC TAG (3*) for use in system (1) according to at least one of the Claims 1 to 6, wherein
- the NFC TAG (3*) is a passive TAG with an NFC antenna (3.1), an NFC transponder chip (3.2) and a matrix (3.3),
- the matrix (3.3) of the NFC TAG (3*) is a plastic matrix in which the NFC antenna (3.1) and the NFC transponder chip (3.2) are welded, **characterized in that**
- an anti-static coating (6.1), in particular, in the form of an anti-static film and/or an anti-static spray coating, is arranged on one side of the NFC-TAG (3*), and
- the NFC TAG (3*) does not comprise a display field.

8. The NFC TAG (3*) according to Claim 7, **characterized in that** an adhesive film (7) is attached to the side of the anti-static coating (6.1) facing away from the NFC TAG (3*), by means of which the NFC TAG (3*) can be glued to the component (2.0) or at least one component (2.1, 2.2, ..., 2.n) of the item (2).

9. The NFC TAG (3*) according to Claim 7 or 8, **characterized in that** the NFC TAG (3*) has a thickness of 0.5 to 10 mm, preferably 0.6 to 3 mm, in particular 0.7 to 1.5 mm, a length of 1 to 25 cm, preferably from 2 to 15 cm, in particular, from 3 to 10 cm, and a width of 0.5 to 5 cm, preferably from 0.7 to 3 cm, in particular, from 1 to 2 cm, measured with a calliper in accordance with DIN EN ISO 13385-1.

10. A method for the individual identification of a plurality of maintenance-relevant items (2) and/or for the targeted retrieval of information concerning the individual items (2) and concerning the component (2.0) or concerning at least a part of the components (2.1, 2.2, ..., 2.n) of the respective items (2) in the system (1) according to at least one of the Claims 1 to 6, and, where applicable, for triggering an action, **characterized in that**
a) an anti-static material (6) is arranged in at least one NFC TAG (3, 3*) and/or between at least one NFC TAG (3) and the component (2.0) or the at least one component (2.1, 2.2, **...,** 2.n),
b) the NFC TAG (3, 3*) is attached to a component (2.0) or to at least one component (2.1, 2.2, ..., 2.n) of an item (2),
c) an individual identification is assigned to each NFC TAG (3, 3*) for the respective component (2.0) or to the at least one component (2.1, 2.2, ..., 2.n) to which the NFC TAG (3, 3*) is connected, whereby the respective item (2) is also uniquely identified by the NFC TAG (3, 3*),
d) at least one piece of information concerning the item (2), component (2.0) or at least one component (2.1, 2.2, ..., 2.n) to which the NFC TAG (3, 3*) is attached is entered into the database on the server and stored there,
e) the NFC-enabled mobile electronic device (4) is positioned within NFC distance to the component (2.0) or to the NFC TAG (3, 3*) arranged on at least one component (2.1, 2.2, ..., 2.n), the NFC TAG (3, 3*) is scanned and thereby, the individual identification stored on the NFC TAG (3, 3*) is read,
f) the software stored on the NFC-TAG (3, 3*) and/or on the NFC-enabled mobile electronic device (4) is started, wherein a connection is established to the database stored on the server (5) and the individual identification read by the NFC-TAG (3, 3*) is transmitted to the server (5),
g) the item (2), the component (2.0) or at least one component (2.1, 2.2, ..., 2.n) on which the NFC TAG (3) is arranged is identified by associating the transmitted individual identification with the same identification stored in the database, and
h) where applicable, information concerning the item (2), component (2.0) or at least one component (2.1, 2.2, ..., 2.n) of the respective item (2) is retrieved from the database of the server (5), and/or an action is triggered.

11. Use of the system (1) according to at least one of the Claims 1 to 6 and use of the NFC TAG (3*) according to at least one of the Claims 7 to 9
i) for the individual identification of a plurality of items (2), wherein each item (2) comprises a component (2.0) or a plurality of different components (2.1, 2.2, ..., 2.n),
ii) or for the purpose of specifically retrieving information concerning the individual items (2) and concerning the component (2.0) or concerning at least some of the components (2.1, 2.2, ..., 2.n) of the respective items (2), and
iii) where applicable, to trigger an action.

12. The use according to Claim 11 in the periodic maintenance of the items (2) and of the component (2.0) or at least a part of the components (2.1, 2.2, ..., 2.n) of the respective items (2).

13. The use according to Claim 11 and/or 12, **characterized in that** the triggering of an action comprises initiating maintenance, ordering and/or replacing a component, triggering an alarm, requesting further information, notifying the owner and/or the technical manager, wherein the triggering of the action is preferably carried out by means of the software stored on the NFC TAG (3, 3*) and/or the mobile electronic device (4), wherein the software preferably comprises a selection menu.

## Revendications

1. Système (1) pour l'identification individuelle d'une pluralité d'objets (2) pertinents pour la maintenance, dans lequel chaque objet (2) est un composant (2.0) ou une pluralité de composants différents (2.1, 2.2, ..., 2.n), pour l'interrogation ciblée d'informations relatives aux objets individuels (2) et au composant (2.0) ou à au moins certains des composants (2.1, 2.2, ..., 2.n) des objets respectifs (2), et le cas échéant pour déclencher une action, dans lequel le système (1)
- comprend un NFC-TAG passif (3) avec une antenne NFC (3.1), une puce de transpondeur NFC (3.2) et une matrice (3.3), dans lequel l'antenne NFC (3.1) et la puce de transpondeur NFC (3.2) sont soudées dans la matrice (3.3),
- un appareil électronique mobile compatible NFC (4), notamment un smartphone ou une tablette, et
- un serveur externe (5),
dans lequel dans une base de données stockée sur le serveur (5) au moins une information relative à chaque objet (2), au composant (2.0) et/ou au moins à certains des composants (2.1, 2.2, ..., 2.n) de l'objet respectif (2), et sur le NFC-TAG (3) et/ou sur le dispositif électronique mobile (4) un logiciel est stocké, au moyen duquel le dispositif électronique mobile (4) peut accéder à la base de données stockée sur le serveur (5), **caractérisé en ce que**
a) le NFC-TAG (3) est fixé à la surface de l'objet (2) et/ou du composant (2.0, 2.1, 2.2, **...,** 2.n) et le NFC-TAG (3) est relié au composant (2.0) ou à au moins un composant (2.1, 2.2, ..., 2.n)d'un objet (2), notamment par vissage, rivetage et/ou collage,
b) au moins dans un NFC-TAG (3) et/ou entre au moins un NFC-TAG (3) et un composant (2.0, 2.1, 2.2, ..., 2.n) un matériau antistatique (6) est disposé, et
c) chaque NFC-TAG (3) pour l'objet respectif (2), avec lequel le NFC-TAG (3) est relié, comprend une identification individuelle, grâce à laquelle le NFC-TAG (3) peut identifier l'objet (2) et/ou le composant (2.0) respectif ou identifie clairement au moins une partie des composants (2.1, 2.2, ..., 2.n) de l'objet respectif (2).

2. Système (1) selon la revendication 1, **caractérisé en ce que** les objets (2) pertinents pour la maintenance et leurs composants (2.0, 2.1, 2.2, ..., 2.n) comprennent des pièces mobiles telles que des portes, des portes coupe-feu et/ou des portails de sécurité, des fenêtres et/ou des portes ; des appareils électriques, c'est-à-dire des appareils fonctionnant à l'électricité, composants électroniques, composants électromécaniques, systèmes de chauffage et/ou de refroidissement et leurs composants, appareils techniques et leurs composants, tels que des conduites sous pression, des réacteurs et/ou agitateurs, des installations techniques et leurs composants tels que des systèmes d'air comprimé, systèmes d'ingénierie de processus, installations de recyclage, broyeurs et/ou leurs installations de broyage, appareillages de commutation pour haute, moyenne et/ou basse tension, notamment systèmes d'alimentation en énergie, systèmes de technique d'automatisation, immotique, installations téléphoniques, systèmes d'antennes, installations de lavage ; des biens industriels tels que des produits semi-finis, installations, machines, équipements, pièces et accessoires, équipements, pompes, vannes, agitateurs et/ou objets mobiles tels que des tondeuses à gazon robotisées.

3. Système (1) selon la revendication 1 ou 2, **caractérisé en ce que** les informations mémorisées sur le serveur (5) relatives aux objets individuels (2) et au composant (2.0) ou à au moins une partie des composants (2.1, 2.2, ..., 2.n) des objets respectifs (2) comprennent des informations relatives au ou aux fabricants, matériaux employés, spécifications, cycles de maintenance, consignes de sécurité et/ou de manipulation, fiches techniques, dispositions de garantie, informations d'installation, conformités, liens vers des pages Internet et/ou adresses externes ainsi que des informations relatives au propriétaire et/ou livrets de service.

4. Système (1) selon au moins une des revendications 1 à 3, **caractérisé en ce que** le déclenchement d'une action comprend le lancement d'une maintenance, la commande et/ou le remplacement d'un composant, le déclenchement d'une alarme, l'interrogation d'informations complémentaires, l'information du propriétaire et/ou de la personne techniquement responsable, dans lequel le déclenchement de l'action s'effectue de préférence à l'aide du logiciel stocké sur le NFC-TAG (3,3*) et/ou sur l'appareil électronique mobile (4),dans lequel le logiciel comprend de préférence un menu de sélection.

5. Système (1) selon au moins une des revendications 1 à 4, **caractérisé en ce que** la matrice (3.3) du NFC-TAG (3) constitue une matrice en plastique et le NFC-TAG (3*) présente une épaisseur de 0,5 à 10 mm, de préférence de 0,6 à 3 mm, notamment de 0,7 à 1,5 mm ; une longueur de 1 à 25 cm, de préférence de 2 à 15 cm, notamment de 3 à 10 cm ; et une largeur de 0,5 à 5 cm, de préférence de 0,7 à 3 cm, notamment de 1 à 2 cm, mesurée avec un pied à coulisse selon DIN EN ISO 13385-1.

6. Système (1) selon au moins une des revendications 1 à 5, **caractérisé en ce que** le matériau antistatique (6)
- est disposé dans le NFC-TAG (3) et est incorporé dans la matrice (3.3) sous la forme d'une poudre, d'une pâte, d'un gel, d'un liquide et/ou d'un revêtement antistatique (6.1) ou est appliqué sur la matrice (3.3) et/ou
- est disposé sous la forme d'un revêtement antistatique (6.1), notamment sous la forme d'un film antistatique et/ou d'un revêtement antistatique en spray, entre le NFC TAG (3) et le composant (2.0) ou le au moins un composant (2.1, 2.2, ..., 2.n).

7. NFC-TAG (3*) destiné à être utilisé dans le système (1) selon au moins une des revendications 1 à 6, dans lequel
- le NFC-TAG (3*) est un TAG passif avec une antenne NFC (3.1), une puce de transpondeur NFC (3.2) et une matrice (3.3),
- la matrice (3.3) du NFC-TAG (3*) constitue une matrice en plastique dans laquelle l'antenne NFC (3.1) et la puce de transpondeur NFC (3.2) sont soudées,
**caractérisé en ce que**
- sur un côté du NFC-TAG (3*) est disposé un revêtement antistatique (6.1), notamment sous la forme d'un film antistatique et/ou comme revêtement antistatique par pulvérisation et
- le NFC TAG (3*) n'inclut pas de champ d'affichage.

8. NFC-TAG (3*) selon la revendication 7, **caractérisé en ce que** sur le côté du revêtement antistatique (6.1) qui se détourne du NFC-TAG (3*), un film adhésif (7) est fixé, au moyen duquel le NFC-TAG (3*) peut être collé au composant (2.0) ou au moins à un composant (2.1, 2.2, ..., 2.n) de l'objet (2).

9. NFC-TAG (3*) selon la revendication 7 ou 8, **caractérisé en ce que** le NFC-TAG (3*) présente une épaisseur de 0,5 à 10 mm, de préférence de 0,6 à 3 mm, notamment de 0,7 à 1,5 mm, une longueur de 1 à 25 cm, de préférence de 2 à 15 cm, notamment de 3 à 10 cm, et une largeur de 0,5 à 5 cm, de préférence de 0,7 à 3 cm, notamment de 1 à 2 cm, mesurée avec un pied à coulisse selon DIN EN ISO 13385-1.

10. Procédé pour l'identification individuelle d'un pluralité d'objets pertinents pour la maintenance (2) et/ou pour l'interrogation ciblée d'informations relatives aux éléments individuels (2) et au composant (2.0) ou à au moins une partie des composants (2.1, 2.2, ..., 2.n) des objets respectifs (2) dans le système (1) selon au moins une des revendications 1 à 6, et le cas échéant pour le déclenchement d'une action, **caractérisé en ce que**
a) dans au moins un NFC-TAG (3, 3*) et/ou entre au moins un NFC-TAG (3) et le composant (2.0) ou le au moins un composant (2.1, 2.2, ..., 2.n) un matériau antistatique (6) est disposé ,
b) le NFC-TAG (3, 3*) est fixé à un composant (2.0) ou à au moins un composant (2.1, 2.2, ..., 2.n) d'un objet (2),
c) à chaque NFC-TAG (3, 3*) pour le composant respectif (2.0) ou le au moins un composant (2.1, 2.2, ..., 2.n) avec lequel le NFC-TAG (3, 3*) est relié, est attribuée une identification individuelle, grâce à laquelle l'objet respectif (3) reçoit une identification unique via le NFC-TAG (3, 3*),
d) au moins une information relative à l'objet (2), au composant (2.0) ou à au moins un composant (2.1, 2.2, ..., 2.n), auquel le NEFC-TAG (3, 3*) est fixé, est saisie et mémorisée dans la base de données stockée sur le serveur,
e) le dispositif électronique mobile compatible NFC (4) est positionné à distance NFC du composant (2.0) ou du NFC-TAG (3, 3*) disposé sur au moins un composant (2.1, 2.2, ..., 2.n), le NFC-TAG (3, 3*) est scanné et donc l'identification individuelle stockée sur le NFC-TAG (3, 3*) est lue,
f) le logiciel stocké sur le NFC-TAG (3, 3*) et/ou sur le dispositif électronique mobile compatible NFC (4) est démarré, moyennant quoi une connexion à la base de données stockée sur le serveur (5) est établie et l'identification individuelle lue à partir du NFC-TAG (3, 3*) est transmise au serveur (5),
g) l'objet (2), le composant (2.0) ou au moins un composant (2.1, 2.2, ..., 2.n) sur lequel est disposé le NFC-TAG (3) est identifié en attribuant l'identification individuelle transmise à la même identification stockée dans la base de données, et
h) le cas échéant, des informations relatives à l'objet (2), au composant (2.0) ou à au moins un composant (2.1, 2.2, ..., 2.n) de l'objet respectif (2) sont interrogées dans la base de données du serveur (5) et/ou une action est déclenchée.

11. Utilisation du système (1) selon au moins une des revendications 1 à 6 et du NFC-TAG (3*) selon au moins une des revendications 7 à 9,
i) pour l'identification individuelle d'une pluralité d'objets (2), dans lequel chaque objet (2) est un composant (2.0) ou comprend une pluralité de composants différents (2.1, 2.2, ..., 2.n),
ii) pour l'interrogation ciblée d'informations relatives aux objets individuels (2) et au composant (2.0) ou à au moins certains des composants (2.1, 2.2, ..., 2.n) de l'objet respectif (2), ainsi que
iii) le cas échéant, pour le déclenchement d'une action.

12. Utilisation selon la revendication 11 dans le cadre de la maintenance périodique des objets (2) et du composant (2.0) ou au moins d'une partie des composants (2.1, 2.2, ..., 2.n) des objets respectifs (2).

13. Utilisation selon la revendication 11 et/ou 12, **caractérisée en ce que** le déclenchement d'une action comprend le lancement d'une maintenance, la commande et/ou le remplacement d'un composant, le déclenchement d'une alarme, l'interrogation d'informations complémentaires, l'information du propriétaire et/ou de la personne techniquement responsable, dans lequel le déclenchement de l'action s'effectue de préférence à l'aide du logiciel stocké sur le NFC-TAG (3, 3*) et/ou sur l'appareil électronique mobile (4), dans lequel le logiciel comprend de préférence un menu de sélection.
